# EUROPEAN PATENT SPECIFICATION

(11) **EP 3 619 693 B1**
(45) Date of publication and mention of the grant of the patent: **13.08.2025**
(21) Application number: 18764849.8
(22) Date of filing: 08.03.2018
(51) Int. Cl.: G06Q 10/08

(54) **AUTOMATED RETAIL FACILITY**
AUTOMATISIERTE EINZELHANDELSEINRICHTUNG
ÉTABLISSEMENT DE VENTE AU DÉTAIL AUTOMATISÉE

(30) Priority: 09.03.2017 US 201762469008 P
(43) Date of publication of application: 11.03.2020
(73) Proprietor: Smartmart, Inc., Memphis, TN 38116 (US)
(72) Inventor: RIVALTO, Michael, A., Memphis TN 38116 (US); FISHER, Jason, Memphis TN 38139 (US)
(74) Representative: Gernet Althaus IP AG
(86) International application number: PCT/US2018/021575
(87) International publication number: WO 2018/165444

(56) References cited:
- EP-A1- 1 419 930
- WO-A1-85/01495
- BE-A3- 1 011 720
- DE-A1- 3 335 654
- DE-U1- 29 621 496
- FR-A1- 2 800 119
- US-A- 2 700 569
- US-A- 4 368 001
- US-A1- 2003 222 092
- US-A1- 2007 187 183
- US-A1- 2008 156 683
- US-A1- 2012 004 769
- US-A1- 2014 091 696
- US-A1- 2014 091 696
- US-A1- 2015 001 247
- US-A1- 2016 235 236
- US-A1- 2016 314 431

## Description

### FIELD OF THE INVENTION

The present invention is generally directed toward an appliance for retail shopping and dispensing/delivering retail goods and services, and more specifically to an automated retail facility for dispensing or administering various goods, products, and/or services.

### BACKGROUND OF THE INVENTION

Product dispensing machines offer convenience to consumers by providing one or more types of goods or products. The type(s) of goods or products available at any given vending machine are generally based on consumer demand and location. The convenience of these devices lies in the speed of transaction, which is facilitated by an automated process (mechanical dispensing without human cashier) and being in a physical proximity to usual consumer traffic. However, there is no available customer service for such devices if an error occurs in a transaction.

The selection of goods and products available at retail brick-and-mortar store fronts follows the same criteria as that of vending machines. So-called "convenience stores" provide faster transactions for certain consumable goods by offering limited selections in smaller spaces than larger retail grocers or other retail stores. In **1937**, Clarence Saunders sought to build on the vending machine model with his automated grocery store, The Keedoozle (see U.S. Pat. No. 2,820,591), which expanded product selection to grocery items and provided a savings in labor and other costs compared to the traditional grocery store. This in turn allowed a cost-savings benefit for the consumer. The brick-and-mortar Keedoozle also offered limited customer service with a cashier onsite. However, the Keedoozle still presented the same hassles and inconveniences for modern consumers that exist with all brick-and-mortar stores.

The inventor addressed some of these problems in U.S. Patent 5,482,139 (Rivalto). The automated drive-up retail facility disclosed in U.S. Patent 5,482,139 provided a leap forward in automated vending facilities. The original Rivalto automated drive-up retail facility remains in service to this day by providing the convenience of a cashier-less vending machine with the customer expectations of a retail goods selection for a convenient store-type location in an urban setting. However, combining such goods in an automated manner presents many challenges for the efficient automated dispensing of certain types of goods without an employee being physically located at the facility.

The inventor also addressed systems for automated package pickup and delivery in U.S. Patent 6,690,997 (Rivalto).

US2016/314431 A1 describes an automated retail machine controlled by a server which operates by receiving an order for at least one item from a processor, and generating a unique identifier corresponding to the order. The unique identifier serves to both identify and retrieve the order, and also process payment method. The server then transmits the unique identifier back to the processor, which is then sent back to the server from a terminal once the unique identifier is processed and activated therein. The order is then sent to the terminal for vending, in which case, the at least one item is automatically vended. The unique identifier is then cancelled.

US2003/222092 A1 refers to a product storage and dispensing apparatus for dispensing retail product at check-out counters, the apparatus comprising a storage device located below a check-out counter for storing retail product below the check-out counter, the storage device including a plurality of vertical storage columns; a dispensing device for transferring the retail product to a position above or beside the check-out counter; one or more access doors; a customer interface with user manipulatable controls for selection of the retail products to be dispensed; an electronic controller capable of receiving and processing commands from a user; and one or more disabling controls to secure against unauthorized dispensing of retail products.

US2007/187183 A1 relates to a process for delivery of classified goods and serviced items through a vehicle drive-thru facility, the facility having a plurality of vehicle drive-thru pick-up portals for goods or services orderable via an electronic or computer medium.

US2016/235236 A1 describes a method, comprising determining, by a controller, a particular compartment of a smart postal box in which a package is to be delivered; associating, by the controller, the particular compartment with an authorized entity; and providing, by the controller, the authorized entity access to the particular compartment by aligning rolling doors of the smart postal box with the particular compartment. This document further describes a postal box, comprising a plurality of shelves that define a plurality of internal compartments of the postal box; a plurality of rolling doors that, when actuated, are configured to expose a particular one of the compartments in which a package is to be delivered; and a controller configured to associate the particular compartment with an authorized entity and provide the authorized entity with access to the particular compartment by aligning the rolling doors with the particular compartment.

US2012/004769 A1 describes an automated retail shelf unit comprising a chassis sized and configured to fit on an elevated shelf in a retail environment; a product storage compartment for securely storing one or more saleable product items within the chassis; and a user interface section provided on a front side of the chassis and configured to face a customer in the retail environment, wherein the user interface section comprises a detecting feature for detecting customer selection of a product item available from the product storage compartment, a payment feature for accepting and processing a cashless payment from the customer for the selected product, and a dispensing feature for dispensing the product item selected and paid for by the customer.

US2014/091696 A1 describes a shelf system for use in displaying and storing merchandise that is especially suited for use in a refrigerated or chiller compartment that can be used with other conventional display sections. The shelving system or unit includes a squared frame that is mounted in a refrigeration compartment. Side or knife brackets are mounted on opposite sides of the frame and shelves on which items of merchandise are stored in spring loaded pusher track systems are mounted on the side brackets. Guide members mounted on the side brackets allow the shelves to slide between a retracted and an extended position on a planar path, but when the shelves reach the extended position, the glide members tilt allowing the shelves to tile for easier access to items stored thereon.

DE29621496 U1 relates to an Aamored money and valuables transport vehicle with chassis, drive motor, driver's cab and transport space, wherein the transport space is essentially formed by at least one extendable armored cell which can be accessed by a person and for the purpose of transferring money and value after it has been extended with its open, free end face to a stationary transfer opening can be docked, and that a movable armored closure element is arranged on the open, free end face of the armored cell, with which the open end face of the armored cell can optionally be closed.

FR2800119 A1 describes a device for ensuring total security of transfer of valuables between a vehicle and a building using an armored telescopic tunnel to link them after safety has been checked by a command control unit.

There is a need in the field for an improved automated retail facility that addresses the foregoing and other challenges.

### OBJECTS AND SUMMARY OF THE INVENTION

The invention is defined by the independent claims and preferred features are set out in the dependent claims.

It is an object of the invention to provide improved systems and methods for stocking stores, such as automated retail facilities, with products for selection and sale to purchasers.

It is another object of the invention to provide improved systems and methods for delivering products to automated retail facilities.

It is yet another object of the invention to provide improved delivery systems for delivering products from automated retail facilities.

It is still another object to provide improved storage and safety features for stocking automated retail facilities.

The foregoing and other objectives and advantages are achieved by providing a system for stocking a store with products for delivery and sale of product to purchasers, together with methods of stocking and operating, having the features described herein.

In embodiments of the system, a facility unit body provides a secured internal storage and dispensing area, the facility unit body having insulation and a cooling system for maintaining products at controlled temperatures, and one or more dispensing locations for delivering products to said purchasers. A plurality of inventory dispensing units are arranged within the facility unit body, the inventory dispensing units comprising trays configured to store and selectively dispense products, each inventory dispensing unit having a stocking end and a dispensing end. A product delivery apparatus is provided in the facility unit body, the product delivery apparatus operatively connected between the inventory dispensing units and the one or more dispensing locations. A plurality of lockable inventory access ports are provided to the facility unit body, each lockable inventory access port providing selective access to one or more associated inventory dispensing units. The inventory dispensing units are configured to selectively slide substantially out of the facility unit body through an associated inventory access port in a suspended relationship with the facility unit body for ease of inspection and stocking of products prior to reinsertion of the inventory dispensing unit back into the facility unit body for dispensing of products. An inventory management vehicle is provided, the inventory management vehicle configured for positioning adjacent to a side of the facility unit body, the inventory management vehicle configured for use in selectively accessing the inventory access ports for secure inspection and stocking of the inventory dispensing units with products.

The inventory management vehicle is a truck comprising a driving cab portion and an inventory supply and restocking portion. The inventory supply and restocking portion may be climate controlled. The driving cab portion may communicate with the inventory supply and restocking portion such that an inventory manager can safely enter the inventory supply and restock portion without leaving the inventory management vehicle. The inventory supply and restocking portion further comprises side inventory doors for selective access to access ports containing products, and a first and a second side shield, the first and second side shields on opposing sides of the inventory side doors. The side shields are extendable between the inventory supply and restocking portion and the facility unit body to provide security and privacy during transfer of products from the inventory supply and restocking portion to the inventory dispensing units of the facility unit body. The inventory management vehicle can further comprise a raised platform that allows convenient access to both high and low positioned inventory dispensing units of the facility unit body.

In embodiments, the plurality of inventory dispensing modules includes goods dispensing trays configured to store and dispense small products. The goods dispensing trays are configured to slide out of the facility unit body such that the stocking end is suspended at an angle of suspension below the dispensing end, the angle of suspension facilitating ease of inspection and stocking of products prior to reinsertion of the inventory dispensing unit back into the facility unit body for dispensing of products. In embodiments, the angle of suspension maybe between about 0 degrees to about 60 degrees. In embodiments, the angle of suspension is between about 40 to about 50 degrees, such as about 45 degrees.

In some embodiments, the goods dispensing trays include a pair of support rails on opposing sides thereof, each support rail having a rail wheel rotatably mounted adjacent a dispensing end thereof. The support rails and rail wheels are mounted in an associated front support hanger track of the facility unit body for use in sliding the goods dispensing tray from the facility unit body in the suspended relationship. Each of the front support hanger tracks has a first and a second stopper on opposing ends thereof, to thereby retain the support rail in the front support hanger track during stocking and dispensing of products.

In embodiments, the plurality of inventory dispensing modules includes rolling rack dispensing units configured to store and selectively dispense heavy or fragile products to the product delivery apparatus via gravity. In some embodiments, the rolling rack dispensing units are positioned below the goods dispensing trays, and dispensing ends of the rolling rack dispensing units are adjacent to the product delivery apparatus to facilitate safe delivery of heavy or fragile products. In embodiments, each of the rolling rack dispensing units comprises a conveyor platform formed by a plurality of transversely mounted freely spinning rollers substantially along a length thereof, the conveyor platform fixedly declined at a dispensing angle from a stocking end toward the dispensing end for dispensing a stock of products to the product delivery apparatus via gravity, and a roller gate mechanism adjacent the dispensing end configured for selectively releasing one of the stock of products to the product delivery apparatus upon selection by a purchaser while retaining the stock of products, the roller gate release being actuated by an electric or pneumatic mechanism. The dispensing angle may be between about 20 to about 40 degrees. In embodiments, the dispensing angle is between about 25 to about 30 degrees, such as about 27 degrees.

In some embodiments, the roller gate mechanism comprises a pair of rotating brackets rotabably positioned on opposing sides of the dispensing end of the rolling rack dispensing unit, the roller gate mounted between the brackets so as to retain the stock of products when roller gate is in a storage position. The roller gate mechanism may further comprise a stopping gate mounted between the pair of rotating brackets for retaining the stock of products when the roller gate is in a dispensing position. The roller gate may comprise a freely spinning roller and the stopping gate may comprise a freely spinning roller, the stopping gate configured to provide one of the plurality of freely spinning rollers when the roller gate is in a storage position, and the roller gate configured to provide one of the plurality of freely spinning rollers when the roller gate is in a dispensing position. In embodiments, the roller gate mechanism is air actuated to the dispensing position and is normally retained in the storage position by a spring mechanism, the spring mechanism preventing the inadvertent delivery of the stock of products in the event of loss of air.

The product delivery apparatus can comprise a conveyor belt apparatus having a dual cantilevered conveyor belt bed configured to create a V-track space between opposing cantilevered bed portions, and a belt component having a V-belt member on a lower side thereof, wherein the V-belt member is configured to run in the V-track space between the opposing cantilevered bed portions, the arrangement providing a resilient bed and belt arrangement for receipt of products. The V-belt member and corresponding V-track space maintain the belt member in alignment in the conveyor belt apparatus. The cantilevered bed portions have a spring-like resilience for cushioning products dropped onto the belt component. The V-belt member may comprise a single tooth having a wide end positioned at the lower belt member surface and a narrow end positioned to enter the V-track space. The V-belt member can be configured to be engaged by a motor for operating the belt member in either direction.

The system can include at least one user interface module for use by said purchasers in selecting products from the inventory dispensing units. The system can further include at least one automated payment module for use by said purchasers in paying for products selected from the inventory dispensing units. In some embodiments, when an inventory dispensing unit is slid out of the facility unit body for stocking the inventory dispensing unit with products, the system automatically takes the inventory dispensing unit out of inventory, such that said purchasers cannot select or purchase products from the inventory dispensing unit during stocking.

The automated retail system can include a means for remotely managing a local client of the automated retail system and a remote operator client of the automated retail system, the means in bidirectional communication with the local client and the remote operator client; a means for remotely managing a product dispensing unit, the product dispensing unit in indirect bidirectional communication with the means for remotely managing the local client and the remote operator client; and a means for remotely managing a customer interface module, the customer interface module in indirect bidirectional communication with the means for remotely managing the local client and the remote operator client.

A method to dispense a product is provided comprising: receiving a process initiation signal from a customer interface module; capturing a photograph via a customer interface camera of the customer interface module; receiving an aisle selection signal from the customer interface module; receiving a product selection signal from the customer interface module; receiving a payment authorization validation signal from a payment gateway module; sending a signal to activate a device actor corresponding to the product selection; the device actor sending a signal to a dispensing unit corresponding to the product selection; and conveying the product to a dispensing chute, the signals, collectively, processed by a remote server in indirect communication with the customer interface module, the payment gateway module, the device actor and the dispensing unit.

A remotely managed automated retail facility may comprise a remote server, a local client, a remote operator client, an automated retail facility body capable of storing and dispensing a plurality of goods to a customer, a customer interface module, a payment gateway module, a plurality of device actors, and a plurality of dispensing units, the plurality of device actors in direct bidirectional communication with the local client and with the plurality of dispensing units, the remote server in indirect bidirectional communication with the local client and with the plurality of dispensing units. The remotely managed automated retail facility may include an automatic package receiver/distributor service module.

A system of managing inventory may comprise a supervisor portal in communication with a control processor for hosting operator actions within the system and establishing one or more connections to a remote network; an administrative client application hosted by the supervisor portal for managing operator actions within the system; an administrative interface comprised of single page apps generated by the administrative client application for inputting and viewing inventory data; and a database for storing inventory, the database in communication with the supervisor portal via the one or more connections to the remote network. The system can further comprise a handheld inventory management device hosting an inventory management application in communication with the supervisor portal via the one or more connections to the remote network for remotely managing inventory data.

### BRIEF DESCRIPTION OF THE DRAWINGS

Further advantages of the invention will become apparent by reference to the detailed description of preferred embodiments when considered in conjunction with the drawings:

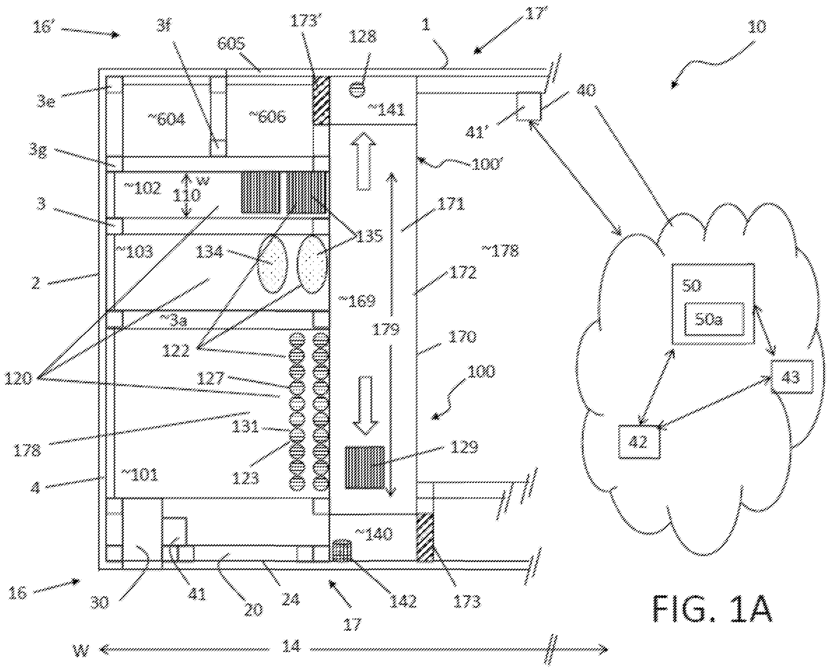

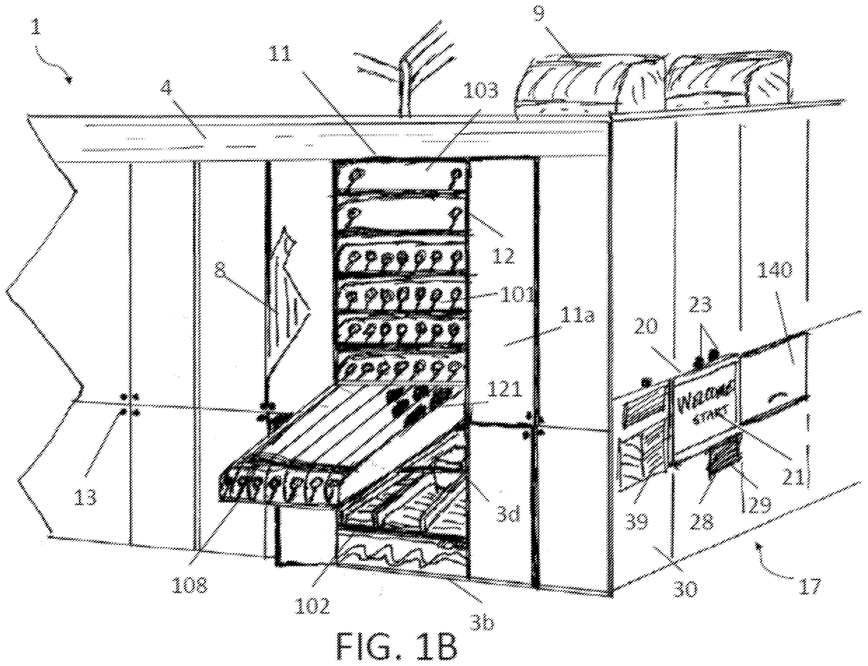

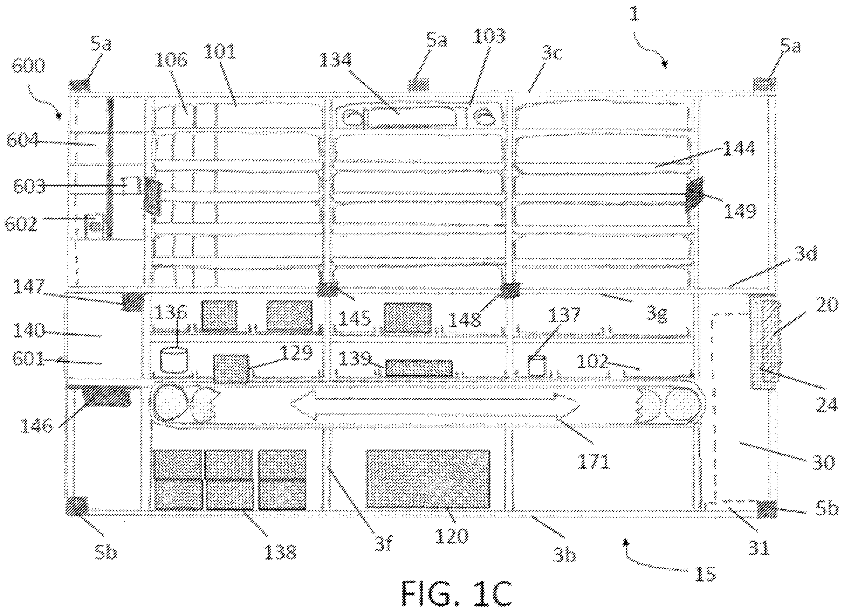

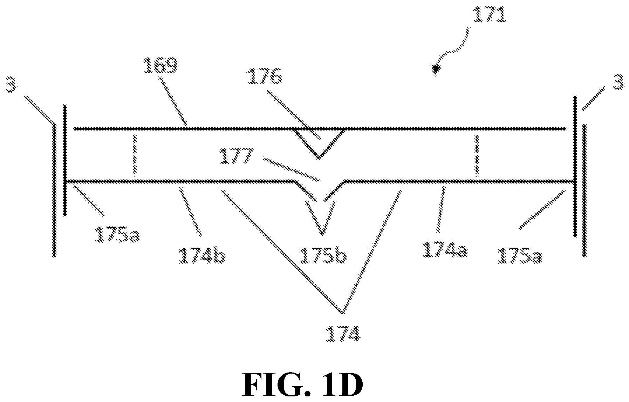

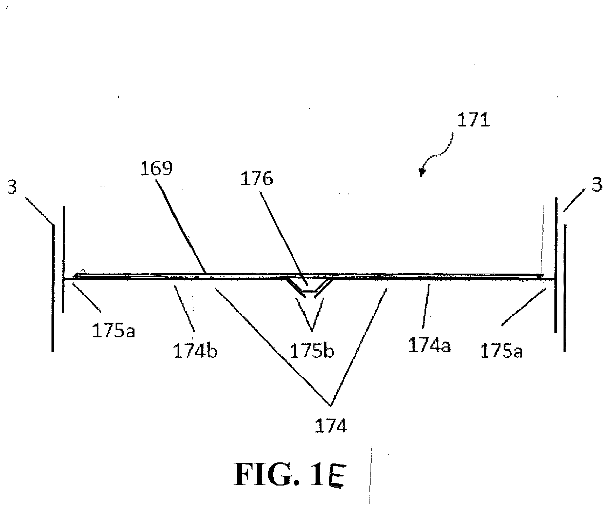

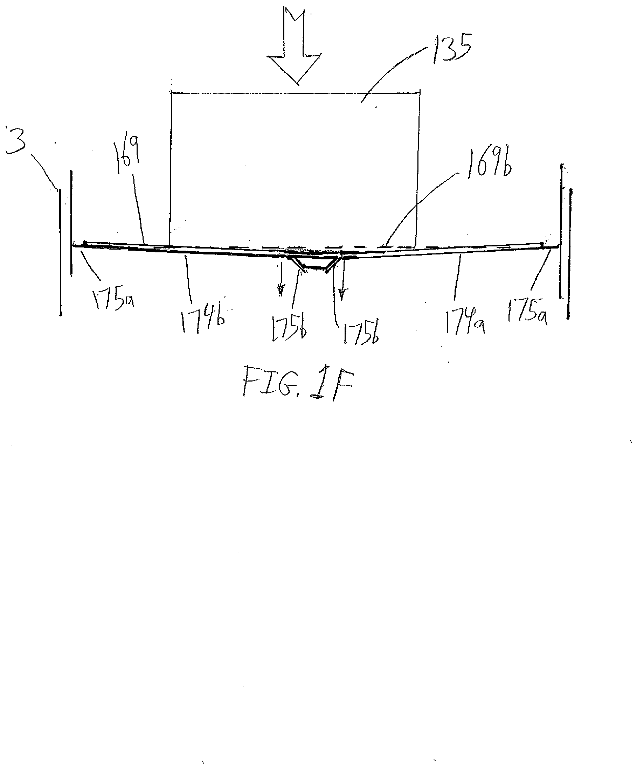

**FIGS. 1**A-**1**D depict schematic representations of an exemplary embodiment of an automated retail facility of the present invention with inventory dispensing modules, user interface modules, automated payment modules, and product dispensing and delivery modules. **FIG. 1**A shows a top plan view of a representative schematic drawing of an automated retail facility in communication with remote computer components. **FIG. 1**B shows a front elevation view of a representative schematic drawing of an automated retail facility with inventory dispensing modules exposed. **FIG. 1**C shows an interior elevation view of a representative schematic drawing of an automated retail facility. **FIG. 1D** is a side elevation view looking down the long axis of the conveyor belt, and it provides a detailed view of a conveyor belt configuration with a V-belt track and underlying double-cantilevered bed to lessen product impact thereon when dropped from an inventory dispensing module. **FIG. 1E** is a side elevation view looking down the long axis of the conveyor belt, and it provides a detailed view of a conveyor belt configuration with a V-belt track and underlying double-cantilevered bed to lessen product impact thereon when dropped from an inventory dispensing module. **FIG. 1F** is a side elevation view as in **FIG. 1E** but showing the conveyor belt and underlying cantilevered bed in a flexed condition upon receipt of a product for delivery to a purchaser.
**FIG. 2** is a block diagram schematic depicting an exemplary embodiment of the interactive and control systems of the present invention.
**FIGS. 3A-3U** are illustrations of a user interface of an exemplary embodiment of an automated retail facility.
**FIG. 4** is an illustration of a remote management interface of an exemplary embodiment of an automated retail facility of the present invention.
**FIG. 5A** is a flow chart depicting the operation of an exemplary embodiment of an automated retail facility of the present invention.
**FIG. 5B** is a flow chart depicting a remote operation of an exemplary embodiment of an automated retail facility of the present invention.
**FIG. 6** depicts an exemplary embodiment of a goods dispensing tray for use as an inventory dispensing module of the present invention with mounted track and rail, as well as optional baffle that allows restocking from outside the store or optional restocking vehicle.
**FIG. 6A** shows an embodiment of a bracket arrangement for use in suspending a goods dispensing tray in a downwardly angled position to facilitate inspection and restocking.
**FIGS. 7A & 7B** depict a rolling rack dispenser for use as an inventory dispensing module of the present invention in ready position (**FIG. 7**A) and in dispensing position (**FIG. 7B**).

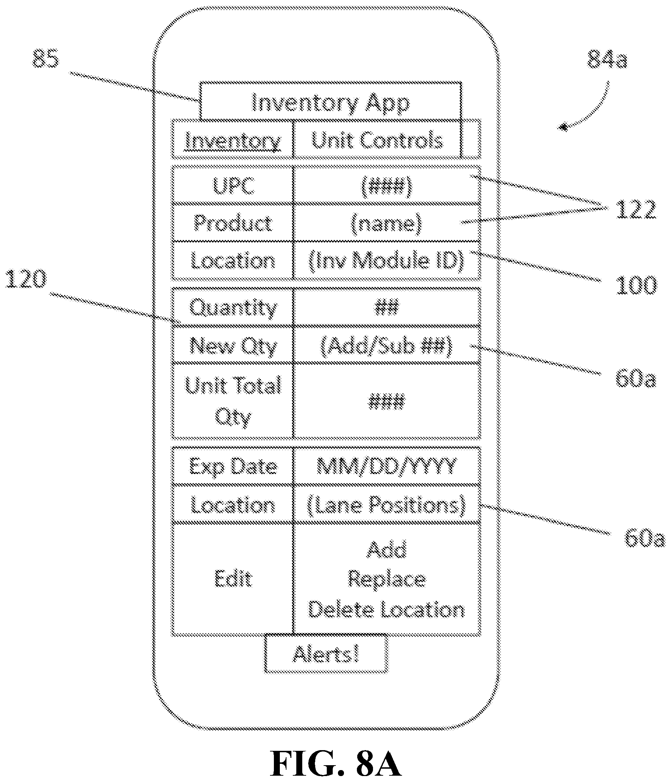

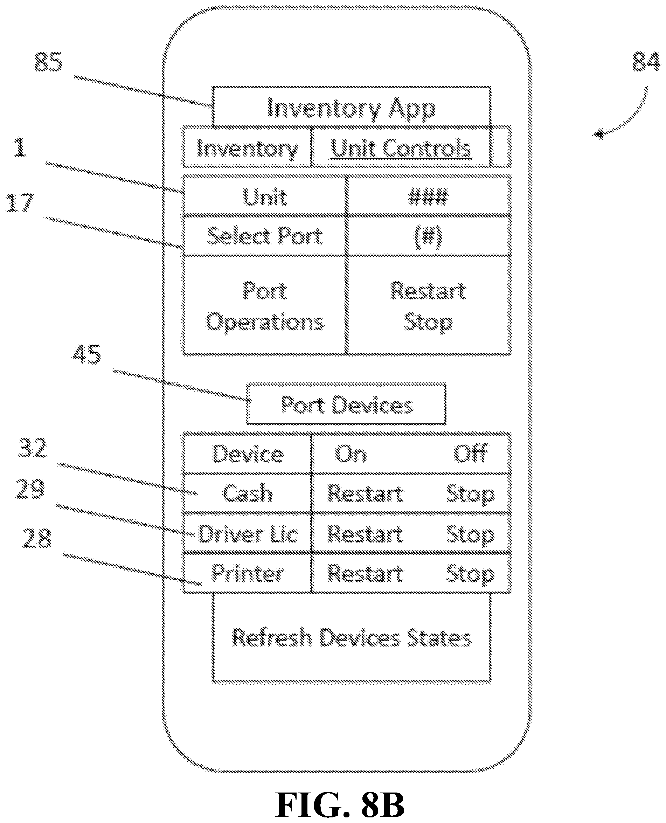

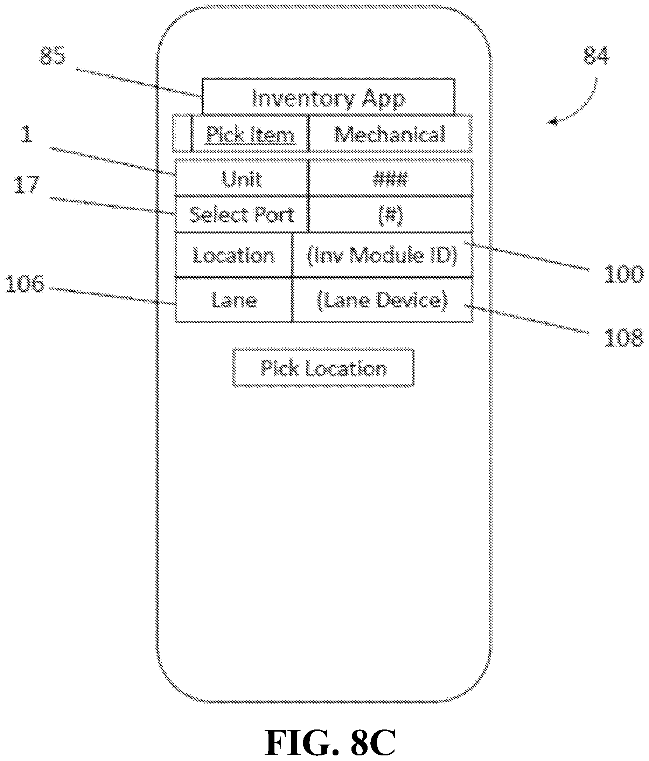

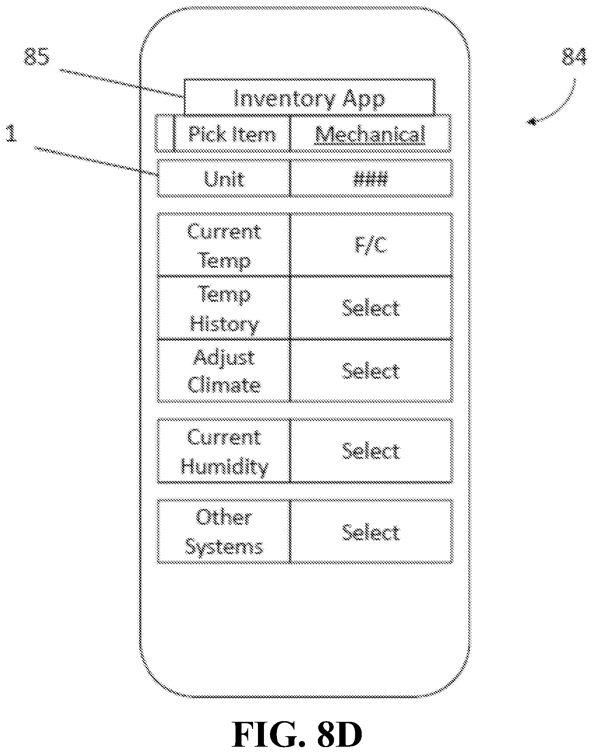

**FIGS. 8A-8D** depict a schematic representation of an exemplary embodiment of a handheld inventory management device and its functions: **FIG. 8**A (Inventory Management Controls), **FIG. 8**B (Unit Controls), **FIG. 8C** (Item Control), and **FIG. 8D** (Mechanical).
**FIGS. 9A-9C** depict an inventory management vehicle for use as an inventory distribution and restocking platform of the present invention in closed mode (**FIG. 9A**) and in restocking mode that allows the vehicle to pull up next to the store for restocking in a temperature controlled and secure environment (**FIG. 9B**). **FIG. 9C** provides details of an arrangement in which the inventory management vehicle is configured to internally receive opened doors of the store.
FIG. 10 depicts a schematic representation of an exemplary embodiment of an automatic package receiver/distributor service module integrated with the automated retail facility.

### DETAILED DESCRIPTION

The following detailed description is presented to enable any person skilled in the art to make and use the invention. For purposes of explanation, specific details are set forth to provide a thorough understanding of the present invention. However, it will be apparent to one skilled in the art that these specific details are not required to practice the invention. Descriptions of specific applications are provided only as representative examples.

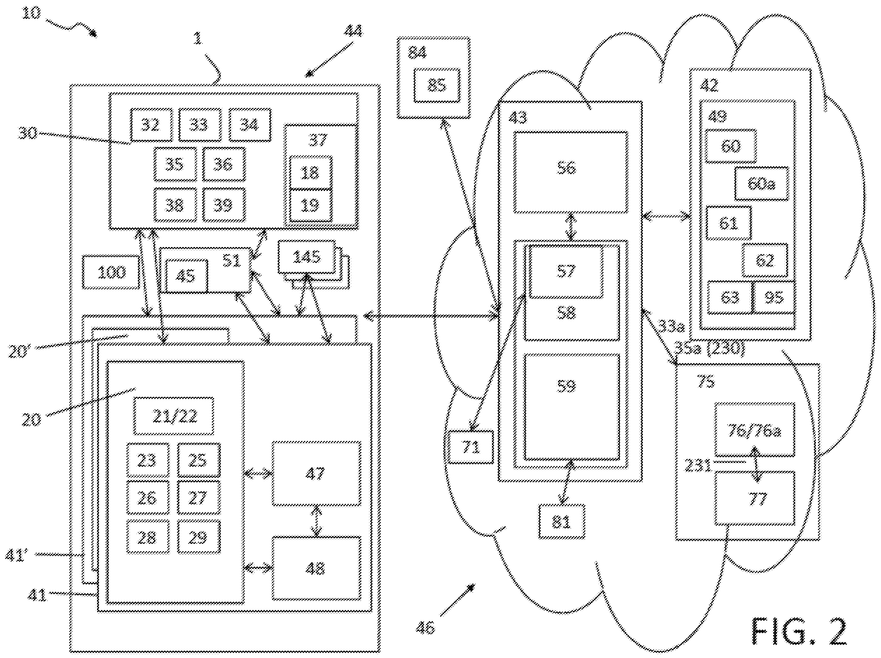

Referring to the drawings, **FIGS. 1A-1C** **&** **2** depict schematic representations of exemplary embodiments of an automated retail facility and system **10** of the present invention. In one embodiment, the automated retail facility **10** comprises an automated retail facility unit **1** with facility unit body **2,** a plurality of inventory dispensing modules (shown schematically as inventory dispensing modules **101 & 102**), at least one user interface module **20,** at least one automated payment module **30**, at least one product dispensing and delivery module **100** (including at least one conveyor belt system **170** and dispensing chute or dispensing location **140**), as well as a management controller **50,** a set of system computer components **40** comprising a local computer **41,** a remote database server **42,** and a remote cloud server **43.** While only two inventory dispensing modules **101 & 102** are shown in **FIGS. 1A** **&** **1B****,** it should be understood that this is for brevity and that any usable form of dispensing and configuration/arrangement of dispensing modules **101** and/or **102** may be used within the scope of the invention, unless otherwise noted. In a preferred embodiment, the management controller **50** is comprised of at least one processor **50a** in communication with the remote cloud server **43,** which is in bidirectional communication with the local computer **41** and the remote database server **42** such that the local computer **41** and the remote database server **42** are in indirect bidirectional communication with each other through the remote cloud server **43** as an intermediary. It should be understood that other configurations may also be implemented, such as, for example, the remote database server **42** may be one and the same with the remote cloud server **43,** which also houses the main processor **50a.** The management controller **50** may be in direct or indirect bidirectional communication with the system computer components **40** via any known method of connecting two computing devices (whether remote from each other or in closer proximity), including wired or wireless access to a remote network (e.g., the Internet or a secured intranet). Thus, the automated retail facility and system **10** can be controlled conceptually as an internet of things (IoT) architecture. Accordingly, preferred embodiments of the automated retail facility and system **10** will be configured with at least one local computer **41** on site, while the remote cloud server **43** with management controller **50** and the remote database server **42** are located remotely from the automated retail facility and system **10.** However, it should be understood that the automated retail facility and system **10** can also be configured to have all system computer components **40** located on site.

In a particularly preferred embodiment, the automated retail facility unit **1** comprises two user interface modules **20 & 20',** two automated payment modules **30 & 30',** two local computers **41 & 41',** and two product dispensing and delivery modules **100 & 100'** (preferably, the modules **100 & 100'** share a conveyor belt system **170** with bidirectional conveyor belt apparatus **171**). It should be understood that other embodiments may contain more or less than two of these modules and/or individual components thereof. Each of the above modules/components is separately associated to form a port **17,** such that this described preferred embodiment has two independent ports (**17 & 17'**). In embodiments comprising more than one product dispensing and delivery module **100,** certain components of this module may be shared, such as a bidirectional conveyor belt apparatus **171,** for internal movement of products **122** as they are dispensed and delivered to a customer. Generally, the automated retail facility unit and system **10** is configured to be modular in its construction and components. The modular nature of both aspects of the automated retail facility unit **1** and computer system components **40** provides great flexibility in construction, including, but not limited to the size of each automated retail facility unit **1** as well as the types and amount of various products **122** stored as inventory **120.** While the term "product" **122** is used throughout this description, it is done so for brevity, and it should be understood that a "product" **122** may be understood in some contexts to be a "good" **123** and in other contexts to be a "service" **124,** and in still other contexts to be either a good **123** or a service **124** that may be purchased or obtained by a customer/user of the automated retail facility and system **10.** By way of example only, and not limiting in any way, a service **124** may include purchasing an access code for a carwash, access or activation of an air pump for vehicle tires, and/or access or activation of a vacuum associated with the automated retail facility and system **10.** Other exemplary services **124** which may be purchased or obtained at the automated retail facility unit **1** are discussed further below. Goods **123,** as used herein, are any moveable and purchasable item that can be stored and dispensed from the automated retail facility unit **1.** Other exemplary products **122** / goods **123** include packages **603** for delivery to a customer/user, especially in association with the automatic package receiver/distributor service module **600** described in detail below. The packages **603** for delivery to a customer/user, as described below, may include packages sent via a postal service, a courier service, an associated retail store (such as a specialty ordered good, a purchase for store pick-up good, a prescription drug order or refill, etc.). In some preferred embodiments, the automated retail facility unit **1** is configured to be mobile, which provides great flexibility in the ultimate deployment setting (location) for a given unit. In more preferred embodiments, the automated retail facility unit 1 is configured to have a width (arrow line "W") dimension **14** that is equal to or less than a standard width of a flatbed trailer, thus making the automated retail facility unit **1** readily and conveniently transportable by road, rail, or other modes of transport. The deployment setting (location) of the automated retail facility units **1** may include, without limitation, traditional storefront convenient store locations (albeit on a much more economical real estate foot print), gas stations, parking lots and parking garages, schools and institutions of high education, associated retail stores, transportation ports and hubs (e.g., train stations, airports, and public transportation stops), apartment complexes, hotels, highway rest stops, and any other location frequented by potential consumers in vehicles or by foot.

The facility unit body **2** is generally cuboid in shape and preferred embodiments are rectangular cuboid to facilitate the modular aspects discussed in more detail below. The facility unit body **2** is comprised of two primary components: frame members **3** and a protective covering **4.** The facility unit body **2** is configured to provide a secured internal storage and dispensing area, the secured internal storage and dispensing area including inventory storage areas **178** and product dispensing areas **179.** The frame members **3** may be constructed of any known construction materials and provide rigid strength to the facility unit body **2** during transport and in its deployment setting (location), which may include parking lots and other close vehicular traffic. The frame members **3** may be structural or non-structural in nature. The frame members **3** may include both structural horizontal **3a** and structural vertical **3e** frame members meeting at the vertices of the facility unit body **2.** Additional structural horizontal **3a** and structural vertical **3e** frame members may be included as needed between vertices to provide adequate structural support to the facility unit body **2,** depending on unit dimensions **14.** Non-structural horizontal **3d** and vertical **3f** frame members (also referred to herein collectively as modular support frame members **3g)** may be included as needed to provide adequate support for the inventory dispensing modules **101** and/or **102** within the facility unit body's **2** inventory storage areas **178.** The facility unit body **2** also contains internal structural frame members **3** and non-structural frame members **3d & 3f.** The array of external (those forming the outer "cage" structure of the facility unit body **2**) and internal structural and non-structural frame members defines the interior spaces of the facility unit body **2.** The center most interior space **15** is the product dispensing area **179** disposed immediately above the conveyor belt apparatus **171** and, preferably, between two inventory storage areas **178** that contain/hold the plurality of inventory dispensing modules **101** and/or **102.**

The lowest horizontal structural frame members **3b** and the highest horizontal structural frame member **3c** are generally of larger dimensions to provide foundational and rigidity support for the facility unit body **2.** The lowest horizontal frame structural members **3b** and the highest horizontal structural frame member **3c** include on one or more outwardly facing sides a plurality of transport facilitation points **5a** that are configured to mate with appropriate large object movers (including, but not limited to, forklift forks, crane attachment hooks, and other well-known heavy equipment machines, not shown). Alternatively, or in addition to the plurality of transport facilitation points **5a,** the lowest horizontal structural frame members **3b** include on the bottom facing side a plurality of mobility facilitation points **5b** that are configured to mate with heavy-duty casters or other load-bearing rollers.

To facilitate the deployment of the inventory dispensing modules **101** and/or **102** within the facility unit body **2,** the structural frame members **3** and non-structural frame members **3d & 3f** are configured to provide attachment points **6** for the various inventory dispensing modules **101** and/or **102.** In some embodiments, the attachment points **6** are thru-holes **6a** for fasteners **7** (e.g., bolts, screws, rivets, or other fasteners) that provide attachment support for the various inventory dispensing modules **101** and/or **102** to the structural frame members **3.** While any fastener known in the construction arts may be used, removable fasteners **7** are preferred to allow adjustment, removal, repair, or providing additional inventory dispensing modules **101** and/or **102** within the facility unit body **2,** as needed or desired. In preferred embodiments, the attachment points **6** are channels **6b** disposed within one or more sides of the structural frame members **3.** The attachment points **6** also may be used to introduce modular support frame members **3g,** for example, when such are needed to provide support for inventory dispensing modules **101** and/or **102** (including, but not limited to, a rolling rack dispenser **102,** described in more detail below) that have different dimensional (arrow line "w") widths **110.** As will be appreciated by a person of ordinary skill in the art, the channels **6b** are particularly advantageous for the modular aspects of the automated retail facility unit **1,** by allowing efficient adjustment of inventory dispensing modules **101** and/or **102** within the facility unit body **2** into a nearly infinite number of possible configurations of deployment within an automated retail facility unit **1.**

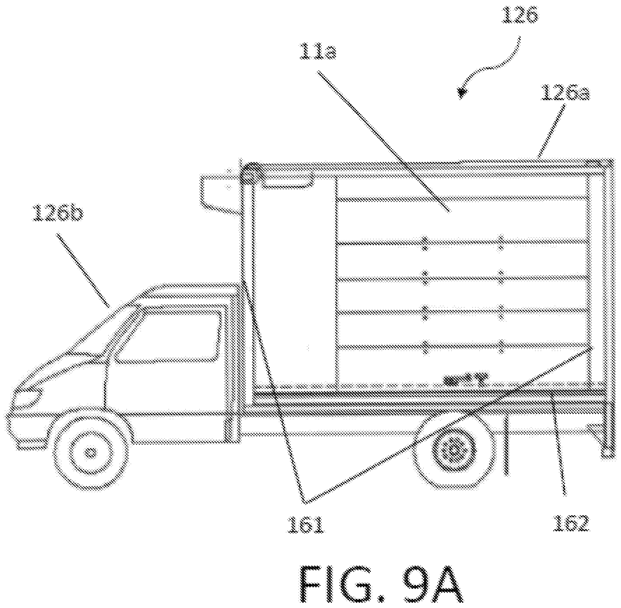

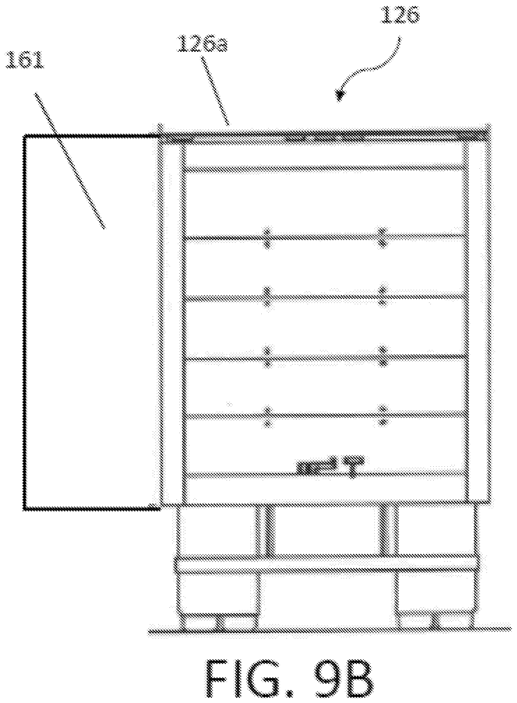

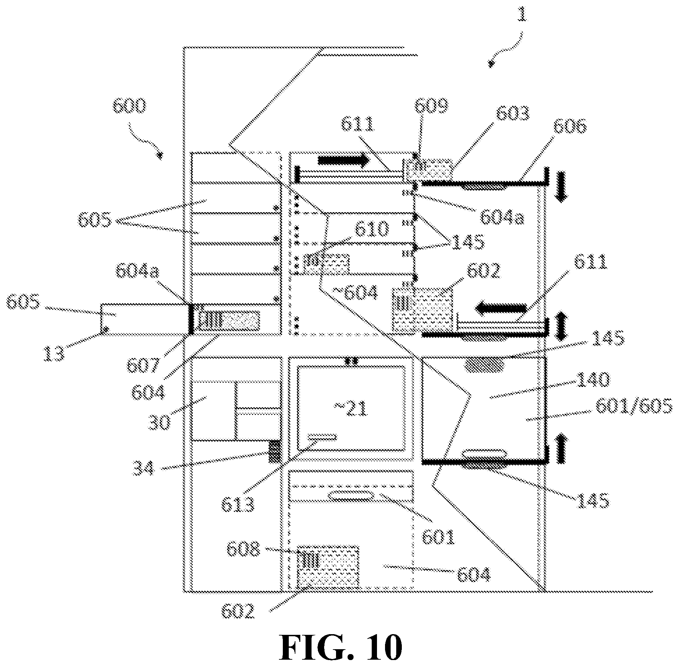

The protective covering **4** of the facility unit body **2** provides a barrier on all sides to the elements for the products and other sensitive equipment within the automated retail facility unit **1.** The protective covering **4** is preferably laminar to provide a contained insulation **8,** but it should be understood that any appropriate insulating materials **8** may be disposed within the facility unit body **2** in any known manner to maintain the desired internal temperature (see **FIGS. 1B** **& 10D**)**.** One or more climate control systems **9** are provided to cool or heat the internal temperature within the automated retail facility unit **1** as needed by the goods **123** kept in inventory **120.** In a preferred embodiment, the one or more climate control systems **9** are configured with the unit **1** to create different climate zones. Climate zones can be created for frozen goods, refrigerated goods, and room temperature goods. In some embodiments, accuracy of a temperature within a climate zone may be controlled directly by an administrator. The unit **1** may be internally divided with insulated "internal walls" held in place using the frame members 3. In a particularly advantageous embodiment, the automated retail facility unit **1** provides accurate climate zones for storing different wines at appropriate temperatures. The protective covering **4** also includes at least one inventory access port **11.** Preferably the automated retail facility unit **1** comprises a plurality of inventory access port **11** to facilitate managing inventory **120,** including restocking and physical audits, as well as adjusting the inventory dispensing modules **101** and/or **102** within the facility unit body **2** and any necessary repairs. The inventory access ports **11** may advantageously extend in a single door from the lowest possible placement of an inventory dispensing modules **101** and/or **102** to the highest possible placement of an inventory dispensing modules **101** and/or **102.** Alternatively, the inventory access ports **11** may also be modular to provide access to a set of inventory dispensing modules **101** and/or **102** within a given space. Preferably, the inventory access ports **11** are configured to be disposed such that inventory dispensing modules **101** and/or **102** located between two vertical frame members **3** are entirely accessible for connection/disconnection to attachment points **6** thereon. In some preferred embodiments, the inventory access ports **11** may be hinged **12** to open on their vertical axis. This configuration is particularly preferred for combined use with an inventory management vehicle **126** (see **FIG. 9A**), discussed in further detail below). However, it should be understood that other opening modes (by way of example only, such as rolling or roll-up panel doors) may be employed. The inventory access ports **11** preferably include insulating materials **8** in order to best serve a modular design and to avoid extra access steps. Inventory access ports **11** include one or more locking mechanism(s) **13** to inhibit unauthorized entry, tampering, or theft. Likewise, the protective covering **4** is made of strong, lightweight material, such as sheet steel or similar alloy or material which may include a laminate corrugated interior to provide further strength and rigidity to the facility unit body **2.**

### User Interface

The automated retail facility and system **10** receives direct customer input at the user interface module **20,** which is securely fixed to the facility unit body **2.** The user interface module **20** is configured to provide a large visually interactive screen **21** to facilitate product selection. While preferred embodiments include a touchscreen **22,** it should be appreciated that other manners of data input may be employed within the scope of the present invention, including, but not limited to, keyboards, mice, touchpads, voice controlled interaction, etc.

The user interface module **20** also includes one or more customer facing cameras **23** (which may include visible light and/or IR wavelength cameras), one or more audio speakers **26,** a microphone **27,** a printer **28,** and a scanner **29** for scanning driver's licenses or other photo identification of a customer when appropriate. In preferred embodiments, the scanner **29** is also capable of functioning as optical reader **36** to scan/copy such items as marketing collateral, gift cards, loyalty cards, food stamps, rewards programs identification, etc. Optionally, the user interface module **20** may also include a keyboard hardware **25.** Preferably, the user interface module **20** is modular in design as a self-contained unit **24** to facilitate efficient removal for replacement, upgrade, or repair of the user interface module **20,** as needed. Preferably, the user interface module **20** includes the local computer **41.** The self-contained unit **24** is advantageously configured to be fixed by removable fasteners between two vertical frame members structural **3e** and/or non-structural **3f.** Preferably, access to the removable fasteners is gained from the interior **15** of the facility unit body **2.** The user interface module **20** is in indirect bidirectional communication with the cloud server **43** for receiving single page apps or other relevant display screens to be displayed on the visually interactive screen **21.** Through the cloud server **43,** the user interface module **20** is in direct bidirectional communication with the local computer **41** and in indirect communication with the other computer system components **40,** such as database server **42** and device actors **47** that control each of the locally disposed components that require a computer for communication over a network (e.g., the customer facing cameras **23** and the card reader device **33**) of the automated retail facility unit **1,** for display of customer-facing input and output information as single page applications ("SPA") (or SPAs that are Web apps that load a single HTML or other appropriate format page that is further dynamically updated as a customer/user interacts with the application or "app"). Importantly, and as discussed below, each of the customer interface displays (screens or pages) at each step in the procedures below are SPAs generated by the computer system components **40,** and not a locally running application at the individual facility local computers **41.** This system architecture provides the ability to remotely manage and manipulate the automated retail facility and system **10** with seamless operations.

A customer may initiate an interaction by contacting the touchscreen **22** and then browse the products **122** available in virtual product aisles/categories **72** displayed on the visually interactive screen **21.** When ready to make a final purchase, the visually interactive screen **21** provides a single page app display with instructions to the customer to select a payment type **220.** The automated retail facility and system **10** receives the selected payment type and related processed information, which may include, without limitation, cash, cryptocurrency (such as Bitcoin), credit/debit card, associated store credit card, customer account tab/balance, contactless payment devices (such as RFID, NFC, mobile payment/digital wallet services, etc.), or other known methods of physical or electronic payment. If such selection includes cash, card, other electronic payment form, or some combination thereof, an automated payment module **30** accepts the payment. The user interface module **20** further comprises a printer **28** to print a receipt for the transaction after payment has been validated and confirmed by the automated retail facility system **10.** In the event that one or more products were not dispensed for any of a variety of reasons, the payment and receipt will reflect cash refund or appropriate credit charged to the customer/user. The error and refund processes are discussed in more detail below. Alternatively, the automated retail facility system **10** may send an electronic receipt via email or text message to the customer. The automated payment module **30** is securely fixed to one or more structural frame members **3** to provide added security for the automated payment module **30.** However, it should be appreciated that the automated payment module **30** is preferably fixed by removable fasteners for the removal of the entire module **30** for upgrade, repair, or other need by an authorized person or service. In some embodiments, an automated payment module platform **31** is constructed into the foundational lowest horizontal structural frame members **3b,** and preferably at a vertex of the foundational lowest horizontal structural frame members **3b.** The automated payment module **30** may be in direct bidirectional communication with the cloud server **43,** and thereby in indirect communication with other system computer components **40** (such as the user interface module **20** and database server **42**) and payment/banking networks, as needed to validate certain payment methods. Importantly, the automated payment module **30** has two separate operating locking mechanisms. A first electronically controlled locking mechanism **18,** such as a magnetic lock by way of a non-limiting example, is provided in communication with the system **10.** The cloud server **43** can send a control message to a Programmable Logic Controller (PLC) **51** for the locking mechanism **18** (as directed by an administrator, including an onsite administrator using a handheld inventory management device **84**) to unlock the banknote and/or coin box **37** for removal, replacement, service/maintenance, replenishment, or other reason. A second locking mechanism **19** separately and independently locks the banknote and coin box **37** housed within the automated payment module **30** to provide further security for funds. The second locking mechanism **19** on the banknote and coin box **37** may be electronically controlled (IoT architecture like the preferred embodiment of first electronically controlled locking mechanism **18**) or be a conventional or specialty lock with a physically entered passcode or bio- or physical key. Preferably, passcode and/or key access is limited to certain personnel or the appropriate financial institution for deposit of funds. This configuration greatly reduces the chance of theft of income from the automated retail facility unit **1,** as the last person to directly handle the money prior to depositing with a bank or other financial institution is a customer. A more detailed interactive, in-person purchase process **200** is described in more detail below.

### Product Dispensing and Delivery Module

The automated retail facility unit **1** further comprises a product dispensing and delivery module **100**, which takes a good **123** from inventory **120** and presents it to a customer. The dispensing and delivery module **100** is primarily comprised of three key components: the inventory **120** stored within a plurality of inventory dispensing modules **101** and/or **102,** a conveyor belt apparatus **171** for moving dispensed goods **129** toward the customer, and the dispensing chute or dispensing location **140.** In a particularly advantageous embodiment, the dispensing chute **140** is at a height/level that is convenient for all customers, whether in a walkup setting or a drive-thru setting, and is compliant with disabilities laws and regulations, such as ADA compliancy. The delivery platform includes an enclosed delivery platform **141** where the purchased goods **128** are accumulated for delivery to the customer. Preferably, access to the dispensing chute **140** is only granted once purchased goods **128** are dispensed and continues until all purchased goods **128** are accumulated. Sensors **145,** discussed below, in the dispensing chute **140** can be configured to alert the system **10** once all purchased goods **128** are removed so that the lock on the dispensing chute **140** can be reengaged. Bags or sacks **142** may optionally be provided within or outside of the dispensing chute **140** to allow bundling of the purchased goods **128** for easier transport. In embodiments having two or more product dispensing and delivery modules **100,** the preferred arrangement is to have these located at opposite sides (e.g., first customer interaction side **16** and second customer interaction side **16',** see **FIG.** 1A) of the automated retail facility unit **1.** This opposite end configuration allows efficient use of the conveyor belt apparatus **171,** which can be configured to operate in both directions, as needed, to move dispensed goods **129** toward two or more dispensing chutes **140** located at the opposite sides **16 & 16'** or in other physical arrangements around a facility unit body **2.** This configuration also provides the most efficient use of space within the automated retail facility unit **1,** as at least two customers can be purchasing goods **123** at the same time and allows for two storage areas **178** on either side for stocked inventory goods **120.** For embodiments where an opposite side configuration is not possible or desirable, a secondary conveyor belt apparatus (**173**) may be located downstream of the primary conveyor belt apparatus **172** for moving dispensed goods **129** at an angle, preferably 90 degrees relative to the primary conveyor belt apparatus **172,** toward each dispensing chute **140.**

### Conveyor Belt Apparatus

For reasons that will be made clear below, the conveyor belt apparatus **171** preferably comprises a resilient conveyor material that provides some cushion for dispensed goods **129** as they fall onto the conveyor belt apparatus **171.** Added cushion is provided by a dual cantilevered conveyor bed **174** that is attached onto the frame members **3** on opposite sides (right and left relative to the long-axis of the conveyor belt **169**) of the conveyor belt apparatus **171** (see **FIG. 1D** in a cross-section view down the long-axis of the conveyor belt **169**). Each cantilevered bed half **174** (right/first half **174a** and left/second half **174b**) is made of a resilient material (e.g., sheet metal) fastened to one or more frame members **3** at a first end **175a** opposite to one another. The second end **175b** of each cantilevered bed half **174a/b** is not attached or fastened to a frame member **3,** but is instead free and angled or curved down relative to the conveyor belt **169** resting or placed on top of the dual cantilevered conveyor bed **174.** The resilient cantilevered conveyor bed **174** acts as springs, like a diving board, as dispensed goods **129** fall onto the conveyor belt **169** such that the landing impact for heavy items is sufficiently reduced to prevent all breaks or harm to such goods **135.** Furthermore, the conveyor belt **169** preferably comprises an underlying V-belt member **176** disposed on the bottom of the conveyor belt **169.** In embodiments, the V-belt member **176** extends along the entire length of the underside of the belt **169.** In an exemplary embodiment, the V-belt member **176** is made of laminate durable rubber material that fits into the V-track **177** created by the space between the two opposing cantilevered second ends **175b** of the cantilevered bed halves **174a/b.** The conveyor belt apparatus **171** motor will engage, directly or indirectly, the V-belt member **176,** either from below the V-track **177** or as the continuous loop conveyor belt **169** wraps around underneath rollers and other mechanical equipment not shown in **FIG. 1D****.** The motor may consist of a pair of roller motors (not shown), each roller motor positioned on opposing ends of the continuous conveyor belt loop so as to configure the roller motors to selectively rotate the conveyor belt **169** in either direction. Freely rotating roller tubes (not shown) may be provided under the conveyor belt **169** for intermediate support and tracking of the belt **169** and underlying V-belt member **176.** The roller motor and roller tubes may be provided with centralized grooves to accommodate the V-belt member **176** of the conveyor belt **169** during rotation. This configuration allows for improved bidirectional tracking and movement of dispensed goods **129** on the conveyor belt apparatus **171** as a typical conveyor belt operating in both directions requires concerted maintenance to remain in proper alignment. It should be understood that failure of the conveyor belt **169** to be maintained in proper alignment will cause disruption in service and lost sales for a unit **1.** In contrast, the V-belt member **176** running in the V-track **177** maintains the conveyor belt **169** in a perpetual state of proper alignment.

While the embodiment shown in **FIG. 1D** appears to show that the conveyor belt **169** is raised above the cantilevered conveyor bed **174,** it is important to note that this presentation is made to better show the components and features of this innovation. In operation, the conveyor belt **169** will rest on top of the cantilevered conveyor bed **174** such that the V-belt member **176** is in communication with the V-track **177,** as shown in **Figure 1E****.** In **Figure 1E****,** the V-belt conveyor member **176** is shown as having a flat lower surface between opposing tapered sides. The V-belt member **176** may be smooth or cogged.

**Figure 1F** depicts the conveyor belt apparatus **171** in a resilient or cushioned condition upon receiving a product **135** dropped from an inventory dispensing module **101, 102.** Dashed line **169b** indicates the normal position of the first and second cantilevered beds **174a, 174b** prior to receipt of the product **135.** As can be seen in **Figure 1F**, when a product **135** drops from an inventory dispensing module **101, 102** onto the conveyor belt **169,** the weight of the product **135** forces the conveyor belt **169** and the underlying second unsupported cantelivered ends **175b** of the cantilevered conveyor beds **174a, 174b** to drop or depress. The resulting flexion of the cantilevered conveyor beds **174a, 174b** absorbs and distributes the force of the fall, after which the conveyor beds **174a, 174b** spring back to their normal configuration. The cantilevered beds **174a, 174b** may be configured to provide selected degrees of resiliency. As noted herein, the dual cantilevered conveyor belt apparatus **171** is particularly suited for protecting fragile or heavy products **135** from damage during delivery to a purchaser. For fragile or heavy products **135,** a give of about ¾ inches (2 cm) is sufficient to prevent damage to the products **135.**

The conveyor belt apparatus **171** will be of a selected length to efficiently use space within the facility unit body **2,** and will generally be about the length of the facility unit body **2.** For example, the conveyor belt apparatus **171** may be about 40 to 45 feet long, with the conveyor belt **169** and V-belt member **176** being about twice this length in order to provide a continuous conveyor loop.

### Inventory Dispensing Modules

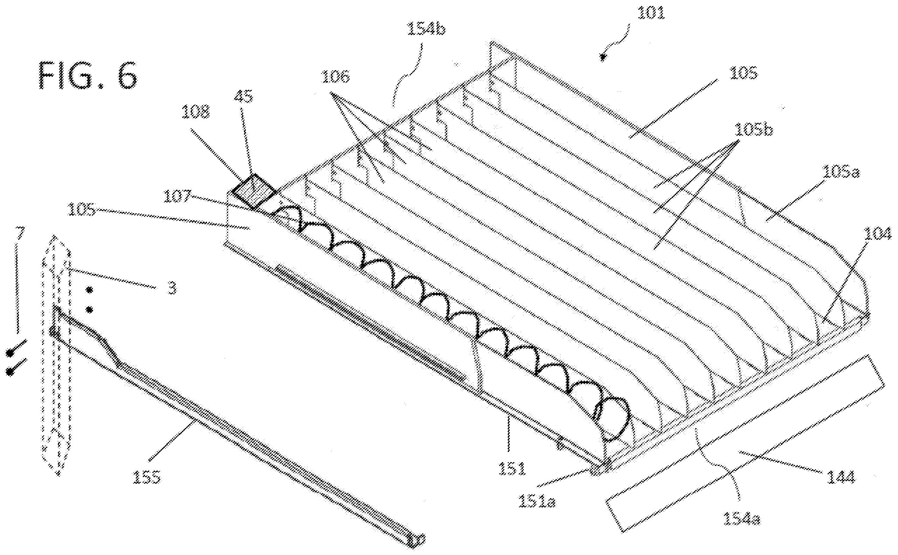

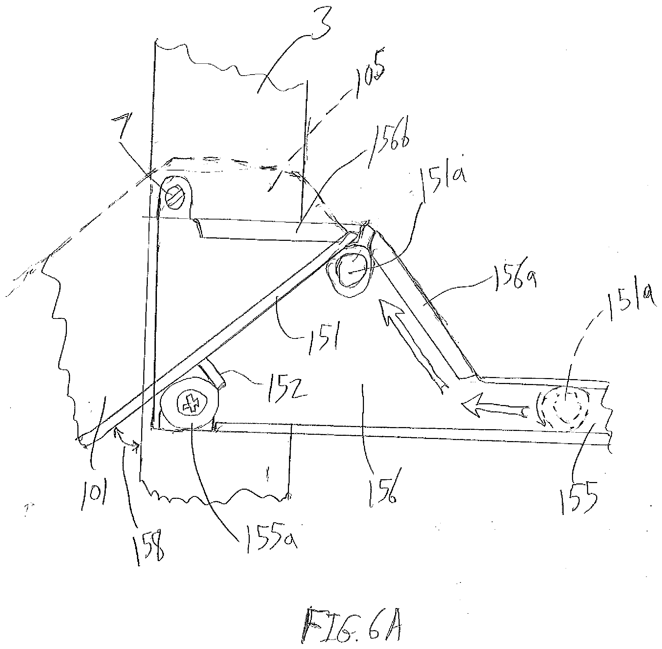

The inventory **120** is stored in and dispensed from a plurality of inventory dispensing modules **101** and/or **102.** The inventory dispensing modules **101** and/or **102** come in a variety of forms, each of which may be for ordinary goods **131** or specially designed and configured for storing and dispensing special goods **135** that require more attention than ordinary goods **131.** Ordinary goods **131** are those that are less prone to damage due to falling from a few feet or more onto the conveyor belt apparatus **171,** and typically are not bulky or heavy. Such ordinary goods **131** may include, by way of example only and not intended to be limiting, cigarettes **132,** gum and mints **133,** breads **134,** and other relatively lightweight items. Therefore, these ordinary goods **131** are generally disposed in the inventory dispensing modules **101** and/or **102** located in the tallest reaches of the inventory storage areas **178.** Special goods **135,** by way of example only and not intended to be limiting, include gallon milk jugs **136,** carbonated beverages **137,** multipacks of beverages **138,** eggs **139,** and other heavy or fragile items. As described above, the inventory dispensing modules **101** and/or **102** are advantageously fastened to a set of structural **3** and/or non-structural frame members. It will be appreciated that inventory dispensing modules **101** and/or **102** may be fixed at an angle that allows gravity to aid in the energy of dispensing the goods **123** into the dispensing area **179.** Depending on the support needed to hold the weight of a fully stocked inventory dispensing modules **101** and/or **102,** more or fewer connections to the frame members **3** will be needed. A typical inventory dispensing module is a goods dispensing tray **101** for ordinary goods **131** (see **FIG. 6**) that requires four fastening connections (two for each support track **155** in communication with its corresponding support rail **151** and rail wheel **151a** disposed on either side of the goods dispensing tray **101**), each disposed on one of four parallel frame members **3.** The goods dispensing tray **101** is preferably made with a standard width to facilitate placement between a set of similarly spaced vertical structural frame members **3.** The goods dispensing tray **101** is comprised of a bottom plate **104** and two side barrier walls **105,** which may optionally include bottom plate extension **104a** and side barrier wall extensions **105a** to customize the product stocking space depth of the goods dispensing tray **101.** Between the side barrier walls **105,** product lanes **106** are created by placing additional barrier walls **105b** running parallel to the side barrier walls **105.** Within each product lane **106** is a corkscrew inventory holder **107** powered by an electric motor **108** at the stocking or back end **154b** of the tray **101** in communication with a PLC **51** as a connected device **45.** Depending on the dimensions of each stocked product **127,** the width **110** (arrow line "w"; see **FIG. 1**) of the product lanes **106** can be adjusted to accommodate larger or smaller products **122.** An activated electric motor **108** turns a corkscrew inventory holder **107** for each activated product lane **106,** which will turn any range of rotation (such as, but not limited to, 1/10, 1/9, 1/8. 1/7, 1/6, 1/5, 1/4, 1/3, 1/2, 2/5, 3/4, 4/5, or 1, 2, 3, 4, 5, 6, 7, 8, 9, and more rotations or any combination or fraction thereof) as needed for any given selected product **128** and programmed (controlled by a PLC **51** as instructed by the system for dispensation) to effectuate dispensing and to eject the selected product **128** from the goods dispensing tray **101** and into the inventory dispensing area **179** where it falls to the conveyor belt apparatus **171.** Based on the angle of dispensing and the height traveled, horizontal baffles **144** disposed at the dispensing end **154a** of an inventory dispensing module **101** on the oppositely located dispensing area may be required to prevent the dispensed good **129** from errantly landing in another, lower inventory dispensing module **101** and/or **102.** Once a dispensed good **129** falls onto the conveyor belt apparatus **171,** sensors **145** will detect and identify the dispensed good **129** as a quality control to ensure that the selected/purchased good **128** was dispensed. Sensors **145** may include one or more of the following: weight scale sensor **146,** optical scanner sensor **147** for reading barcodes and the like, light curtain sensor **148** for measuring dimensions, photographic image recognition sensors **149** that compare the image of the actual dispensed good **129** with a stored image of the selected/purchased good **128,** and combinations thereof.

The majority of products can be stocked in a goods dispensing tray **101.** To allow for restocking of goods, a goods dispensing tray **101** has front support hanger track **155** mounted on the bottom of the barrier wall **105** containing sides of the goods dispensing tray **101.** At the dispensing end **154a** of each extension there is located a rotatable wheel **151a** that fits within a corresponding front support hanger track **155.** As shown in **FIG. 6****,** the front support hanger track **155** is fastenably attached, e.g., with removable fasteners **7,** to the set of frame members **3** to support the goods dispensing tray **101,** thus allowing the goods dispensing tray **101** to be slid out of the inventory storage area **178** substantially completely. To hold the goods dispensing tray **101** in the front support hanger track **155,** a stopper **152** is located at each end of the front support hanger track **155.** The complete sliding movement facilitates viewing of the entire goods dispensing tray **101** and all currently stocked inventory **121.** However, the complete sliding movement also takes up a great deal of space for the inventory manager to contend with. Also, the highest placed goods dispensing tray **101** may be too high for convenient inspection and/or restocking. Having to restock from an elevated position may cause an unsafe condition for the restocking inventory manager. Therefore, we have found that positioning the goods dispensing tray **101** at a downward angle **158** when completely slid out in the restocking position solves both challenges and facilitates safe and efficient inspection and/or restocking.

**Figure 6A** provides additional details about an embodiment for maintaining a goods dispensing tray **101** at a downward angle **158** during inspection and stocking. The support rail **155** includes an enlarged support rail bracket portion **156** formed on a stocking end of the support rail **155.** The enlarged support rail bracket portion **156** includes an inclined rail **156a** and an upper rail **156b,** as well as an open (no rail) stocking end. A freely rotating wheel bearing **155a** is fixedly positioned on a lower edge of the support rail bracket portion **156** adjacent the open stocking end. The rotating wheel bearing **155a** is positioned to allow a lower surface of the support rail **151** of the goods dispensing tray **101** to translate along the rotating wheel bearing **155a** during withdrawal and reinsertion of the tray **101** from the facility unit body **2.** In this arrangement, the tray **101** is thus supported by two wheels: (1) the rail wheel **151a** positioned on the dispensing end of the support rail **151** of the tray **101;** and (2) the wheel bearing 155a of the support bracket **155.** In **Figure 6A****,** a position of the rail wheel **151a** in the track of the support bracket **155** is indicated in broken lines. As indicated by the flow arrows, as the tray **101** is withdrawn from the facility unit body **2,** the rail wheel **151a** rotates into the enlarged bracket portion **156,** where it initially tracks against the inclined rail **156a** as the stocking end of the tray **101** begins to drop relative to the dispensing end. When the stopper 152 abuts against the wheel bearing **155a,** the rail wheel **151a** comes to rest in abutment with the upper rail **156b.** As can be seen in **Figure 6A****,** this arrangement temporarily maintains the tray **101** in a downward angle **158** during inspection and restocking. The downward angle **158** is determined by the width of the enlarged bracket portion **156,** the position of the stopper **152** on the support rail **151,** and diameters of the wheel bearing **155a** and rail wheel **151a.** As will be appreciated, mirror images of this arrangement are provided on opposing sides of the tray **101.** When the stocker is finished stocking, the stocker lifts the stocking end of the tray **101,** which causes the rail wheel **151a** to drop out of the enlarged bracket portion **156** and back into the support track **155.** Due to the foregoing arrangement, withdrawal and reinsertion of the tray **101** is accomplished with minimal physical effort on the part of the stocker.

### Rolling Rack Dispenser

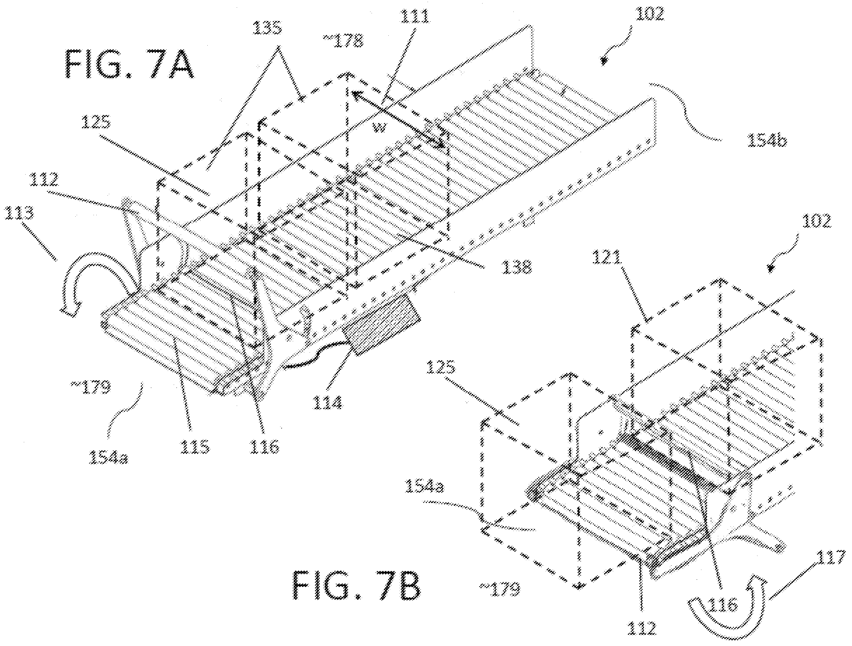

It has been found that special goods **135,** and some delicate goods (e.g., breads **134**), are best stocked and dispensed from inventory dispensing modules **101** and/or **102** specially designed and/or positioned for these goods **135.** Heavy items or larger fragile items, such as gallon jugs of milk and multipacks of carbonated beverages, including beer and soda, are advantageously stocked and dispensed from a rolling rack dispenser **102** (shown in **FIGS. 7A and 7B**). Preferably, the rolling rack dispenser **102** is positioned in close proximity (height) to the conveyor belt apparatus **171** such that the special goods **135** thereon only drop from a relatively short height/distance to the conveyor belt **171.** A rolling rack dispenser **102** may be configured to carry a particular special product **135,** preferentially based on the product dimensions **111,** so that a maximum number of such product **135** can be stored in inventory **120** on the rolling rack dispenser **102.** Thus, the rolling rack dispensers **102** in a given automated retail facility unit **1** may contain different dimensional (arrow line "w") widths **110** (see **FIG.** 1B). The rolling rack dispenser **102** is attached to horizontal frame members **3a** and/or **3d** such that it is disposed at an angle for gravity to pull the mass of the product **135** down to facilitate dispensing onto the conveyer belt apparatus **171.** The horizontal frame members may be structural **3a** or non-structural **3d** frame members. Alternatively, the rolling rack dispenser **102** is attached to vertical frame members **3e** and/or **3f** such that it is disposed at an angle for gravity to pull the mass of the product **135** down to facilitate dispensing onto the conveyer belt apparatus **171.** The vertical frame members may be structural **3e** or non-structural **3f** frame members. Of course, the rolling rack dispenser **102** may be attached to both horizontal frame members **3a** and/or **3d** and vertical frame members **3e** and/or **3f,** as available. When a stocked product **127** in a rolling rack dispenser **102** is selected for dispensing, a roller gate **112** is lowered in a rotating motion **113** toward the dispensing area **179** (see starting position as **FIG. 7A**). The roller gate lowering action **113** may be powered by an electric or a pneumatic mechanism **114,** or it may be powered by gravity and the weight of the inventory **120** stocked in the rolling rack dispenser **102** while being unlocked by an electric or a pneumatic mechanism **114.** The lowering of the roller gate **112** allows all inventory **120** stocked in the rolling rack dispenser **102** to move forward as the rollers **115** freely turn under the weight of the stocked inventory **121.** However, as the first in-line product **125** moves forward, a stopping gate **116** attached to the roller gate **112** is raised in an opposite rotating motion **117** behind the first in-line product **125.** This effectively allows only one selected product **128** to complete the rolling path onto the conveyor belt apparatus **171** (see **FIG. 1D**). It should be appreciated that the open back end (end away from conveyor belt **171** and roller gate **112**) is positioned for easy restocking from outside the unit **1** or from an optional restocking vehicle **126** (see, e.g., **FIG.** 1B).

It should be appreciated that the goods dispensing tray **101** can be modified to include one or more delicate product dispenser lanes, as well as utilizing any remaining space for creating product lanes **106** for ordinary goods **131,** as described above, for efficient use of space. Also, a goods dispensing tray **101** can be configured to only dispense delicate goods, such as breads **134.** Alternatively, a rolling rack dispenser **102** can be configured to dispense delicate goods, such as breads **134** or eggs **139.**

### Control System

Referring now to **FIG. 2****,** a representative schematic diagram of an exemplary embodiment of the control system of the present invention is shown. One key improvement of the present invention is the IoT architecture for remotely driven control of the automated retail facility and system **10.** As can be appreciated in **FIG. 2****,** the automated retail facility unit **1** comprises a local computer **41** as a low level component **44** in direct bidirectional communication with a cloud server **43,** and the cloud server **43** is in direct bidirectional communication with a database server **42.** It should be understood that the cloud server **43** could also incorporate one or more of the database server(s) **42.** In turn, the local computer **41** is in indirect bidirectional communication with the database server **42** via the cloud server **43.** Each constituent component (connected devices **45,** such as an electric motor **108** that dispenses a product **122,** pneumatic devices, actuators, or certain components of the cash machine module **32**) at the automated retail facility unit **1** is in direct bidirectional communication with the local computer **41,** but the local computer **41** obtains all instructions and display data for the connected devices **45** from the higher level components **46** (the cloud server **43** and the database server **42**). A PLC **51** then controls the connected devices **45** through the bidirectional communication within the system **10.** This novel IoT configuration allows seamless remote management and manipulation of each computer-connected device (system computer components **40**) and mechanical component (connected devices **45**) of the automated retail facility unit **1** via a remote network connection. PLC **51,** thus, can be used to control all connected devices **45** (those devices that are capable of directly communicating over a network with a computing device). While certain devices are taught in this disclosure to be connected devices **45** in communication with PLC **51** (e.g., the magnetic locking mechanism **18,** dispensing motors **108,** and other mechanical devices), other components of the unit **1** that are taught to use a computer-connection for control (i.e., those devices requiring a device actor **47** computer connection to access a communication network) could have direct network connection and control by a PLC **51** if so configured now or in the future. Such design changes are contemplated to be within the scope of the present inventions. It should also be understood that PLC **51** could be a software component of the local computer **41** or a standalone device. While the automated retail facility unit **1** is associated with the "local computer **41"** in this description, it should be understood that the cloud server **43,** local computer **41,** and database server **42** may each be in a single location (including at a single automated retail facility unit **1**), but the possible configurations and IoT architecture of the computer system components **40** in communication with locally disposed mechanical components **45** allow for one or each of these three primary computer device components to be remote from one another or each of these various components. Also, each automated retail facility unit **1** may have more than one port **17** having its own local computer **41,** such that each port **17** has its own local computer **41** associated with its own user interface module **20.** Thus, as an example, in an automated retail facility unit **1** with two ports **17 & 17'** (see **FIG. 1**), each local computer **41** may have a dedicated user interface module **20,** automated payment module **30,** and product dispensing and delivery module **100** at the automated retail facility unit **1,** but the connected devices **45** for the inventory dispensing modules **101** and/or **102** in the automated retail facility unit 1 are preferably in direct bidirectional communication with the cloud server **43,** which is in direct bidirectional communication with the first local computer **41** and the second local computer **41'.**

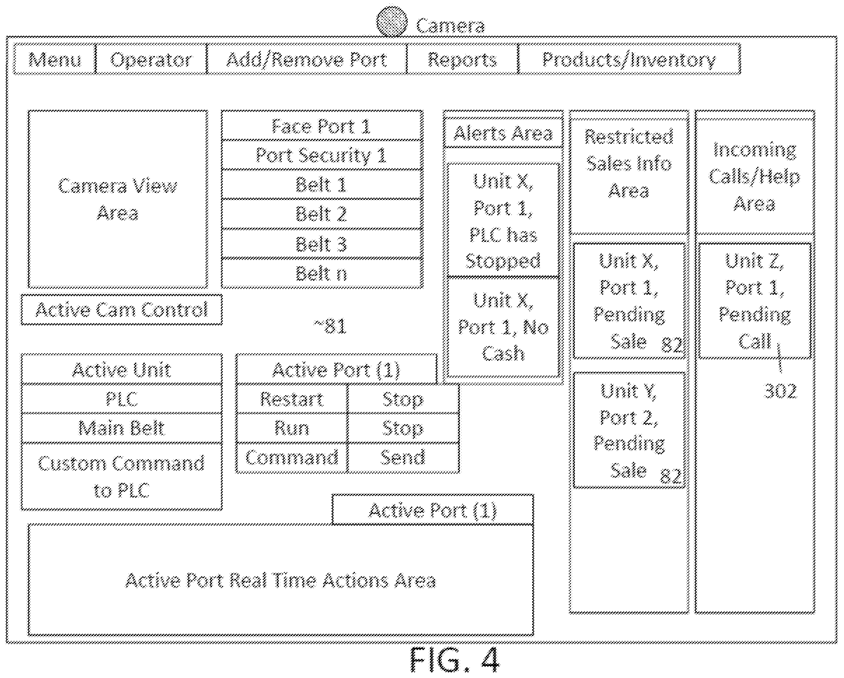

The cloud server **43** further comprises control modules for facility client **56** operations, supervisor client **58** operations, and administrative client **59** operations. Facility client **56** operations include, without limitation, the programmable logic controllers (PLC **51**) that are in direct bidirectional communication with the local computer **41,** which, in some embodiments, relays network communication messages to and from the PLC **51** and cloud server **43.** Supervisor client **58** operations include, without limitation, remote manipulation of local facility components through the supervisor actors **48** (e.g., camera/video activation, printer restart, operate dispenser motor (via device actors **47**) override or other commands of the connected devices **45** (via a PLC **51**), etc.), validation of restricted product sales **82** via scanned government issued photo identification and/or video conference interaction with a customer, a "help" **83** procedure activated by customer, and others. Administrative client **59** operations include, without limitation, management of inventory data **60** stored in the database server **42** (preferably within a managed database **49**), accounting management data **61** stored in the database server **42,** update of product information **62** stored in the database server **42,** run reports of error messages **63** stored in the database server **42,** and others (see **FIG. 4**). The handheld inventory management device **84** (see also, **FIG. 10A**) and app **85** are capable of performing both supervisor client **58** operations and administrative client **59** operations based on user/operator credentials.

Under the primary (low) level are the underlying actor levels for the connected devices **45** and the computer-connected customer interactive devices (e.g., in modules **20 & 30**)**.** The device actors **47** control activation of and send operational reports for each computer-connected component such as most customer interactive devices of the unit **1,** while a PLC **51** allows for direct network communication (albeit via the local computer **41** with internet access in some preferred embodiments) to components such as a dispensing unit/dispensing motor **108** and other connected devices **45,** including the individual components of the product dispensing and delivery module **100.** Thus, the normal operation of a rotary motor **108** for dispensing one or more of a stocked good **127** will receive its instructions from the PLC **51** , which receives its activation instructions from the facility client **56** located at the higher, cloud server **43** level of the system. Before operation instructions are provided, the facility client **56** via the cloud server **43** will have confirmed with the database server **42** the location of the dispensing unit **108** for the selected product(s) **128** to be activated, as well as confirmed that the selected good(s) **128** is/are in sufficient quantity to satisfy or partially satisfy the requested purchase. Once the dispensing unit **108** has completed its operation, it will send a message indicating normal or error operation to the cloud server **43,** which will in turn send the message up the system levels where it is recorded against stored inventory data **60** and/or error message data **63** in the database server **42.** These messages from the connected devices **45,** such as the dispensing unit **108,** merely indicate normal operations or a failure (error) in operation (e.g., that the dispensing unit **108** rotary motor turned the appropriate amount or not. Sensors **145** (see above) located in the product dispensing area **179** and/or dispensing chute **140** may be used to confirm the dispensing of the selected product(s) **128** based on stored product information **62** in the database server **42.**

When necessary, the dispensing units **108** and other connected devices **45** of the unit **1** can also be manipulated by the supervisor actors **48** (directly or indirectly), if error reports are generated or during physical inspection by an operator/inventory manager (a maintenance/troubleshooting operation and supervisor manipulation, with proper credentials of the operator, may conveniently be performed via a handheld inventory management device **84** through a remote network connection with the cloud server **43** and supervisor client **58**). For example, a dispensing unit **108** will report any malfunction to the PLC **51,** which may be at the local computer **41,** and which will then relay the message up a level to the facility client **56** at the cloud server **43** level, which will then send the error information **63** to the database server **42** and the supervisor client **58.** The PLC **51** will automatically instruct the appropriate connected device **45** to attempt dispensing the selected good **128** once again if an error occurred. The database server **42** will send a message to the administrative client **59** and/or supervisor client **58** (including display on appropriate administrative interface(s) **81** and /or supervisor interface(s) **71**) for continued monitoring and/or noting the error. If an error persists, note is again made (stored) in the database server **42,** and instructions are sent from the facility client **56** via the cloud server **43** for the PLC **51** to activate a second or subsequent dispensing unit **108** that contains the selected product **122** (in some circumstances, the same goods **123** may be stocked in inventory **120** in more than one product lane **106** with its own dispensing unit **108,** which will be known to the automated vending facility system **10** via inventory data **60** stored on the database server **42**). This operation will go through the same automatic restart and error recording/display process for the first dispensing unit **108.** If additional/subsequent dispensing units **108** for the selected product **128** are available, they will likewise be activated in turn. In the unlikely event that a selected product **128** cannot be dispensed after a second or subsequent appropriate connected device **45** activation, the customer will be notified that the product is not available, which will also start a refunding process **74** (discussed in further detail below). It is important to note that the customer will not be notified of an error unless the selected product **128** is completely unavailable; otherwise, the customer will be none the wiser of any error in dispensing.

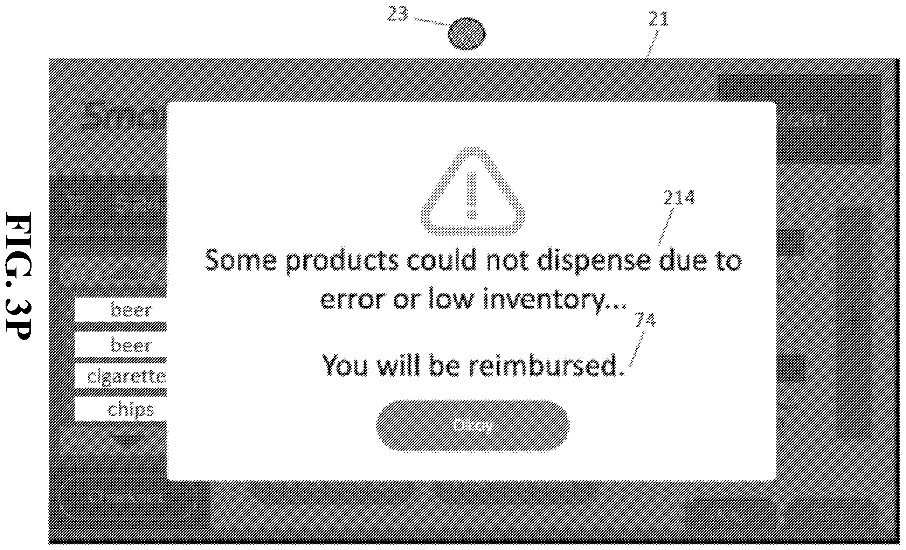

The supervisor client **58** can also be used to attempt a manual restart of the dispensing unit **108,** but in most cases that will not be necessary due to the automated restart and reassignment of dispensing units **108** that occur at the lower level PLC **51** in communication with the facility client **56,** as described above. As noted above, error messages **63** are received and stored in the appropriate databases **49** at the database server **42** as well as notifying the operator client **57.** The operator client **57** includes the supervisor client **58** operations and the administrative client **59** operations. The supervisor client **58** operations can remotely shut down a faulty dispensing unit **108;** however, the system **10** may be configured to automatically shut down a faulty dispensing unit **108** and send an error report **63** to the cloud server **43** to be processed, sent to appropriate monitoring clients (**58** and/or **59**), and then stored database server **42** for the faulty dispensing unit **108** to be inspected, replaced, and/or repaired at the next site visit by an inventory manager. If a selected product **128** cannot be dispensed from any dispensing unit **108,** the customer will be alerted by a Dispensing Error Screen **235** (**FIG. 3P**), and, if necessary, will receive a refund and notification on a receipt.

For a payment transaction, the customer is alerted on the interactive screen **21** of the customer interface **20** as another single page app to select a method of payment via communication from the local computer **41.** It should be noted that the information comprising what form of payment is acceptable or available at the port **17** is stored in the database server **42** and relayed to the cloud server **43** where the client **56** generates an appropriate single page app and transmits it to the local computer **41** for display. Without limitation, acceptable methods of payment are any known in the retail field, including, but not limited to, cash, credit/debit card, associated store credit card, customer account tab/balance, vouchers, customer loyalty program credits, contactless payment devices (such as RFID, NFC, mobile payment/digital wallet services, etc.), or other known methods of physical or electronic payment. The payment gateway **75** is then activated by a device actor **47** via instructions from the client **56** based on the selected payment method. Once payment is received, the selected payment actor (**32, 33, 34**) of the payment module **30** will report back to the local computer **41** of a message for a successful payment step or any errors during the process. The local computer **41** relays this received information to the client **56** at the cloud server **43,** which also sends the information for storage at the database server **42.** For payments requiring access to the remote network (for example, credit/debit card payments), the local computer **41** will send gathered card information (and input PIN, if required) and the connection request through the client **56** at the cloud server **43** where a secure connection is made thorough a payment gateway **75** to the appropriate credit card association **76** and/or issuing bank **77.** The payment gateway **75** will send back the transaction approval, decline, and/or processing error(s) to the client **56** at the cloud server **43,** which relays the information back to the local computer **41** and appropriate device actor **47.** See below for exemplary processes for different payment and refund methods. If payment was accepted, the local computer **41** also receives the higher level instructions to begin dispensing. The client **56** PLC(s) **51** will activate the appropriate connected devices **45** for the purchased goods **128,** which activates the appropriate dispensing units **108** (see above). As with all other information generated by each component of the system **10,** payment success or error messages (and the details of the same) are reported to the database server **42** through the local computer **41** and the cloud server **43.**

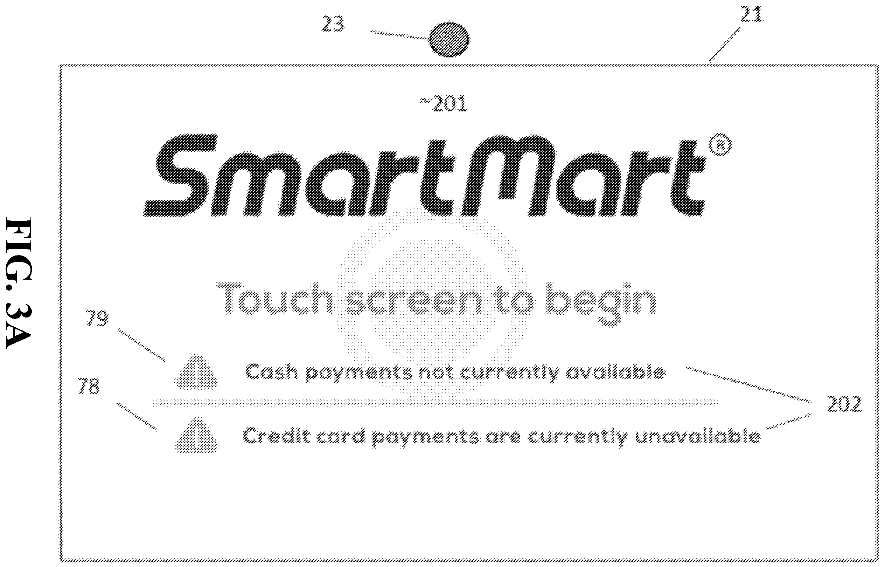

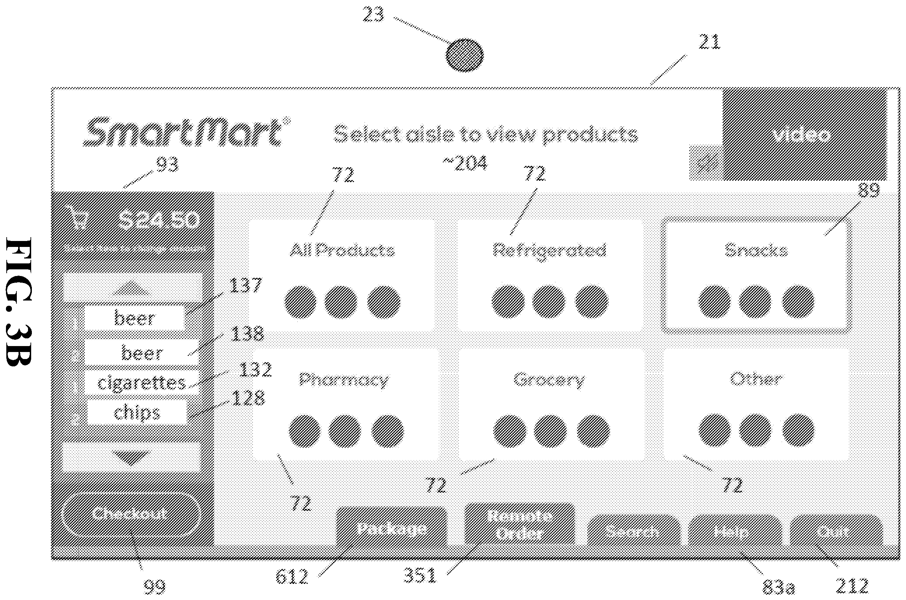

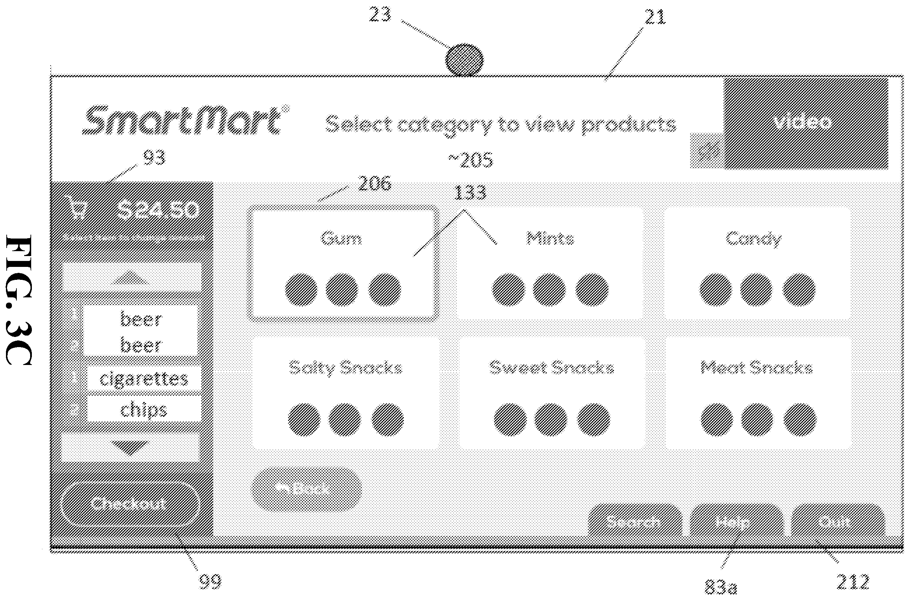

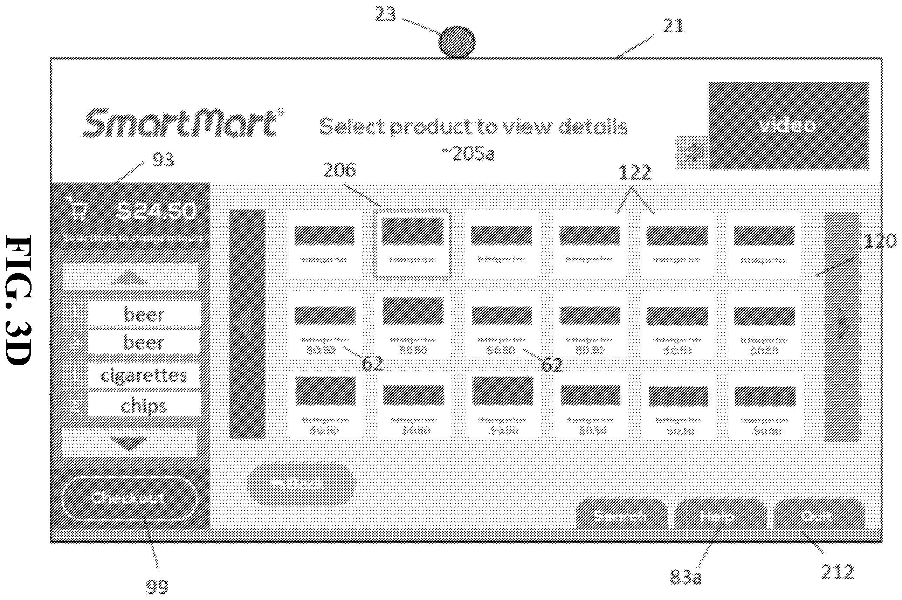

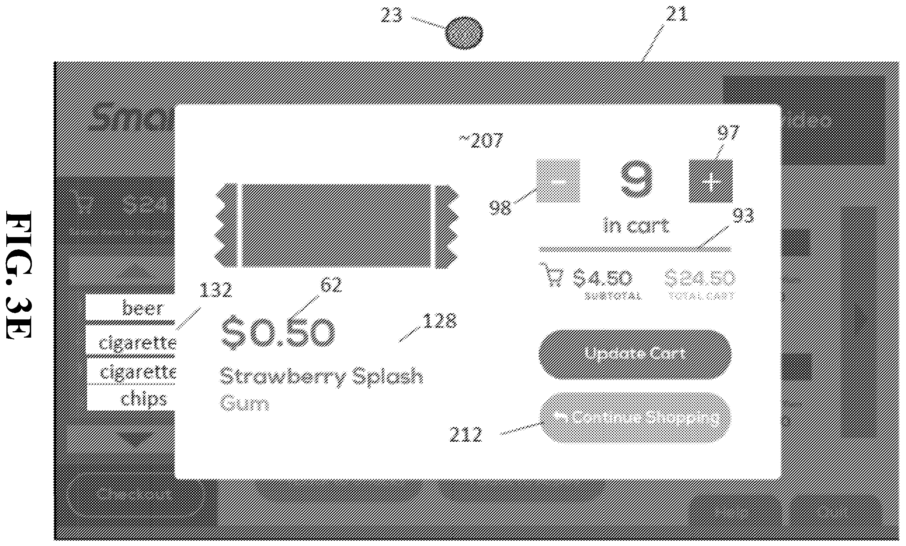

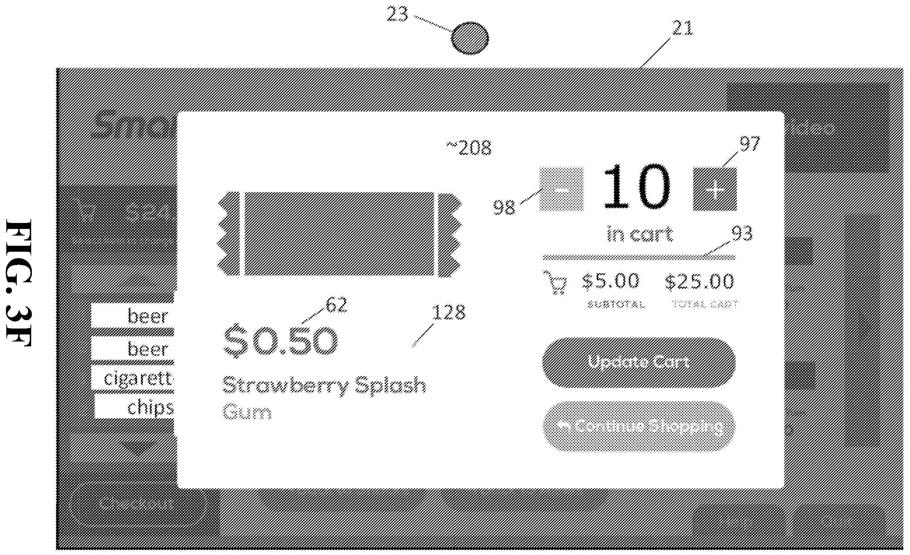

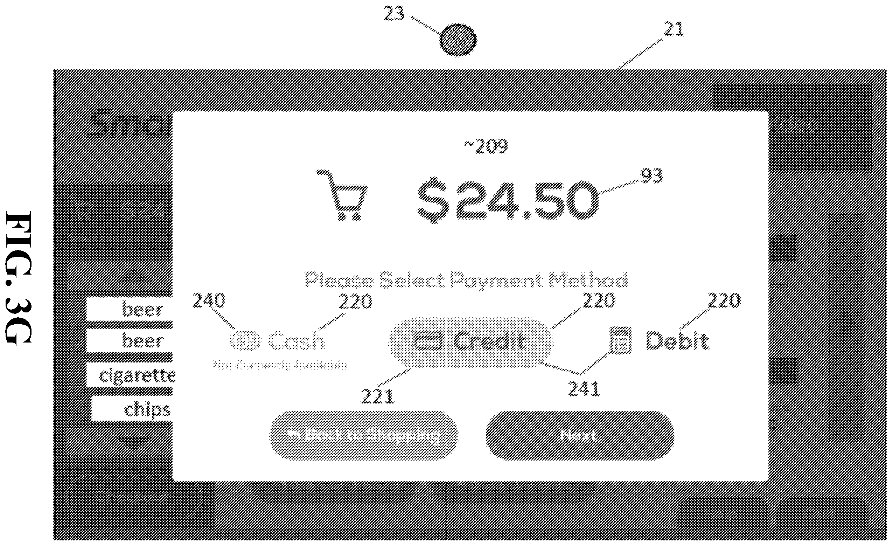

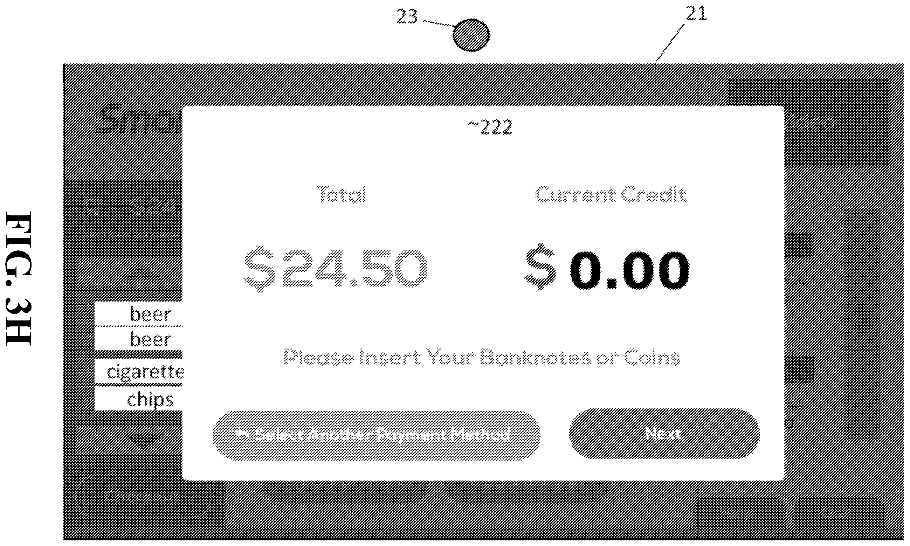

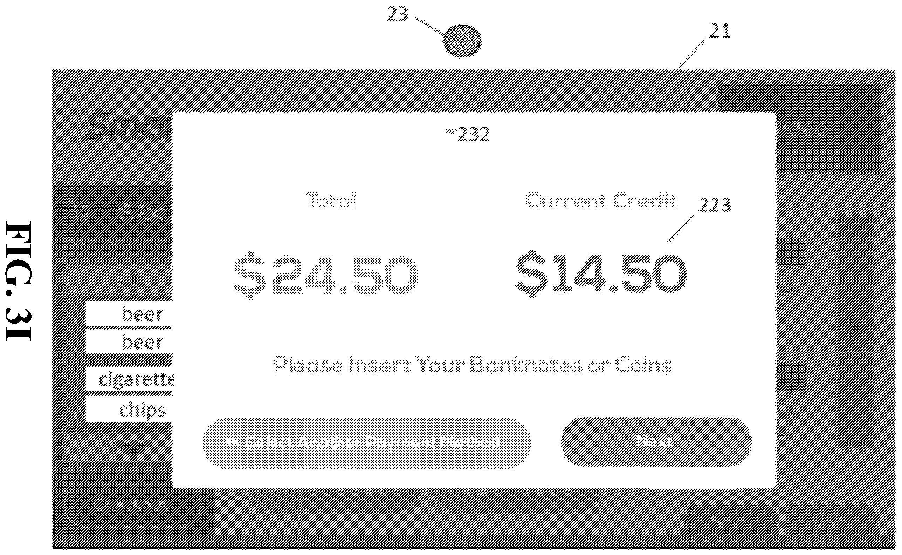

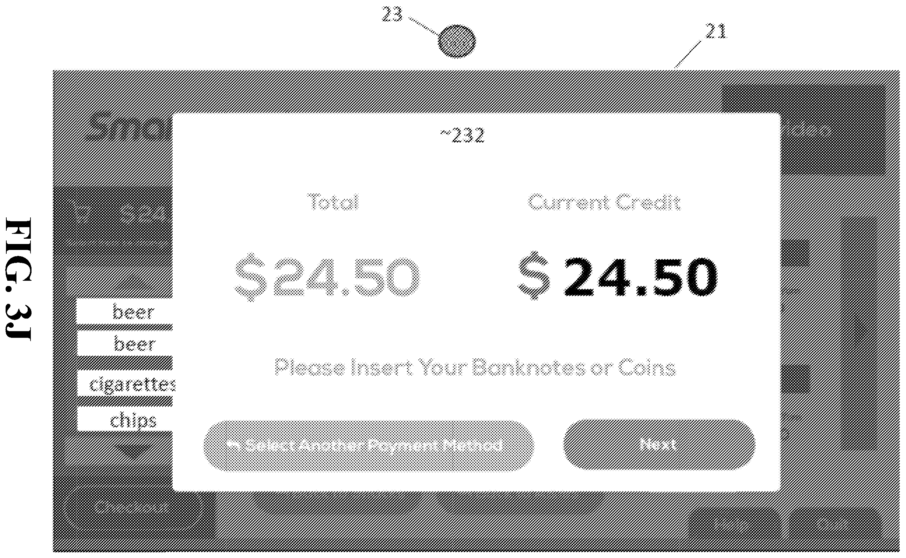

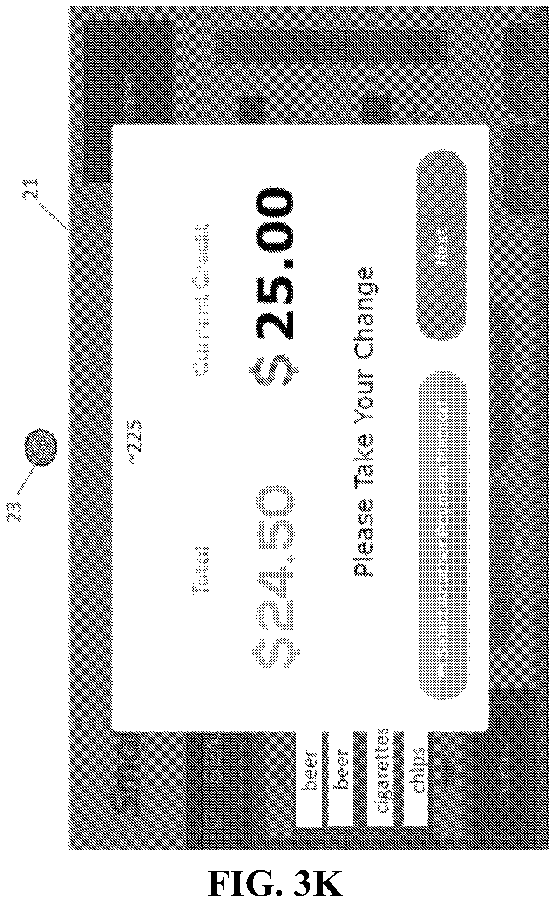

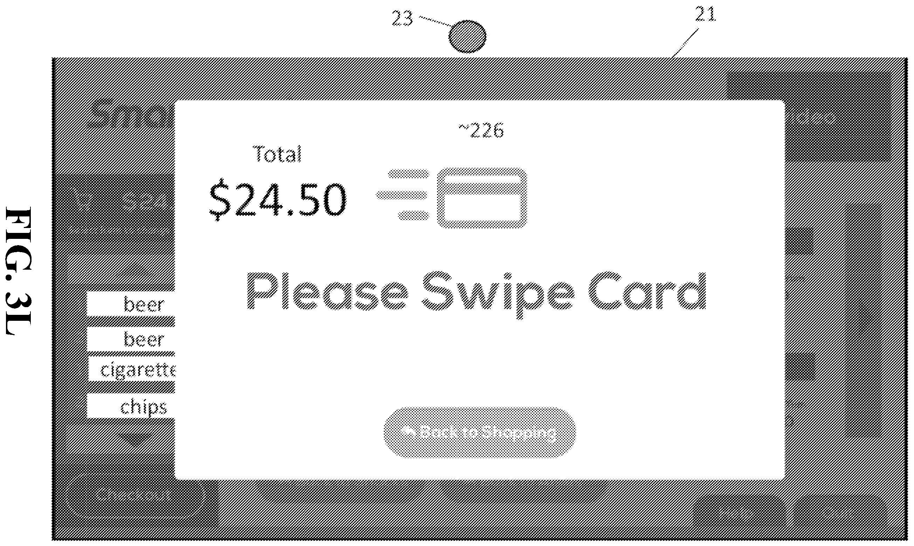

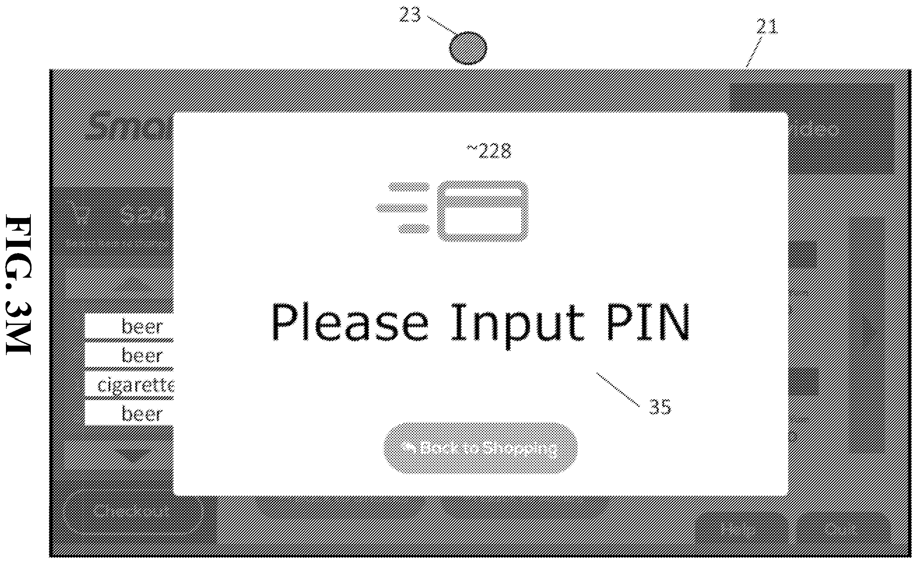

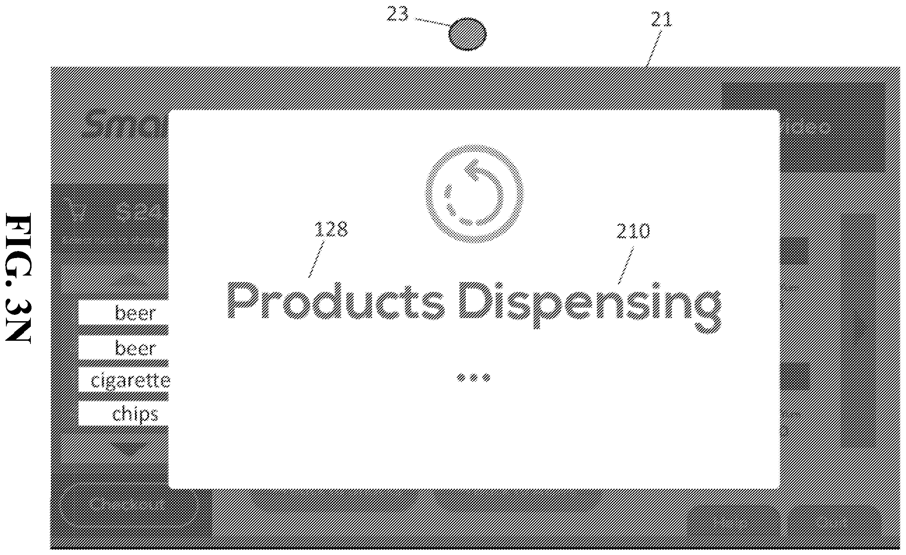

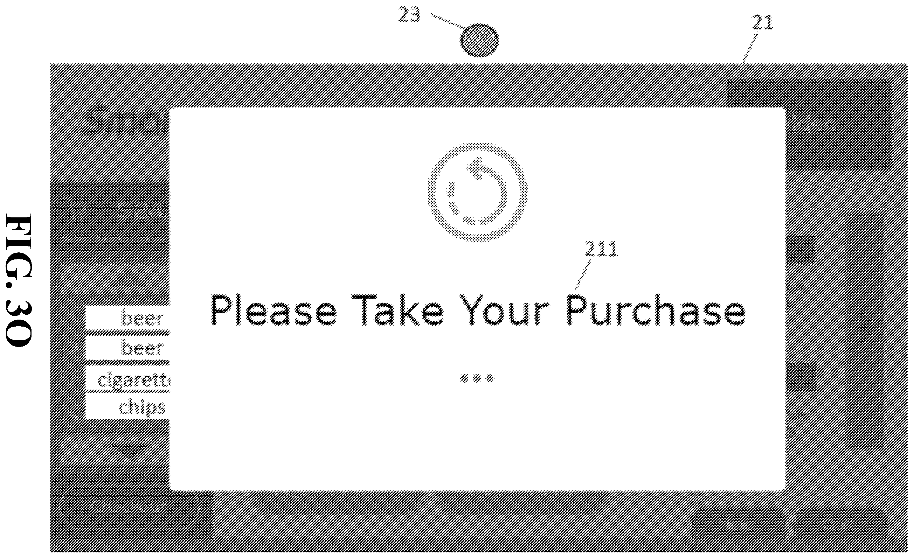

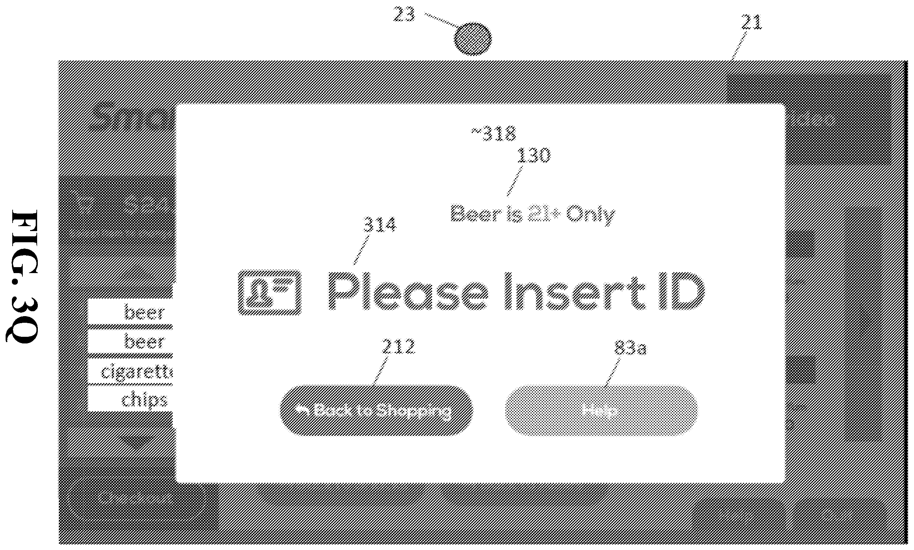

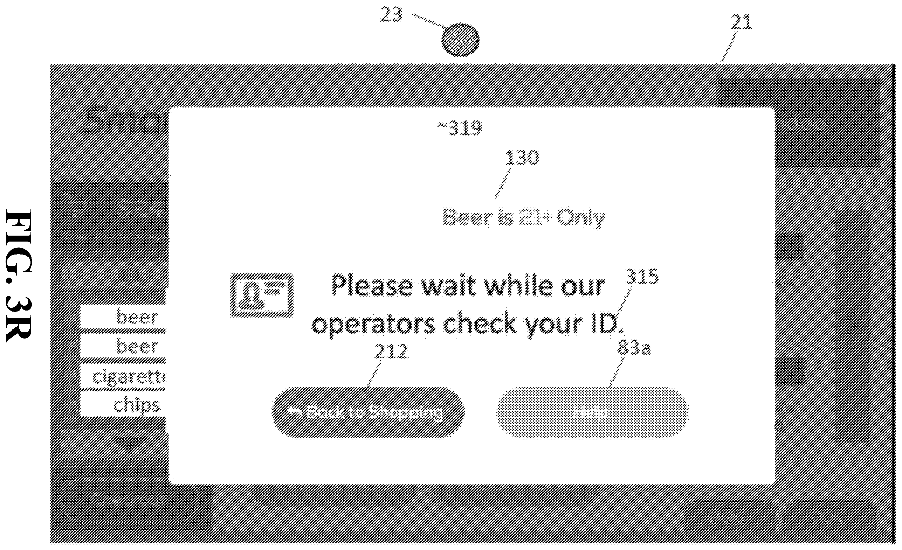

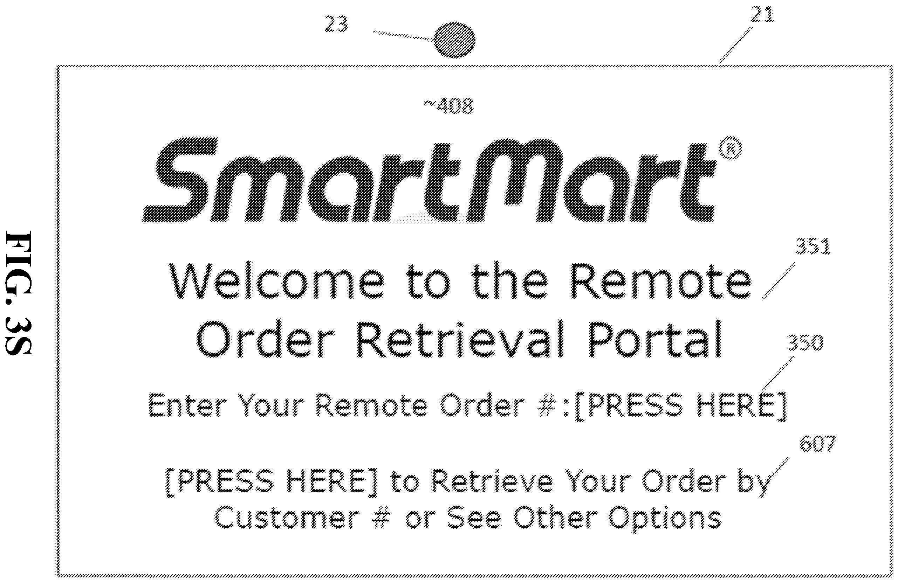

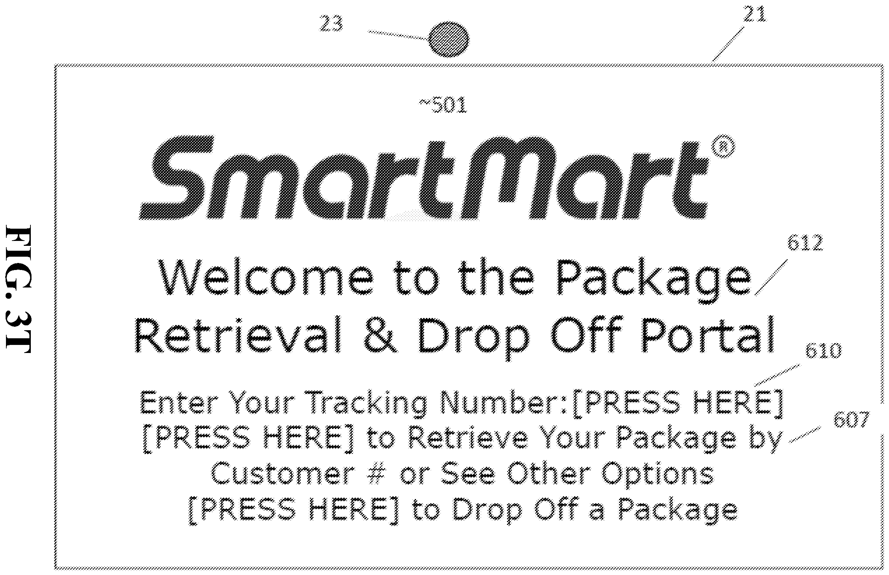

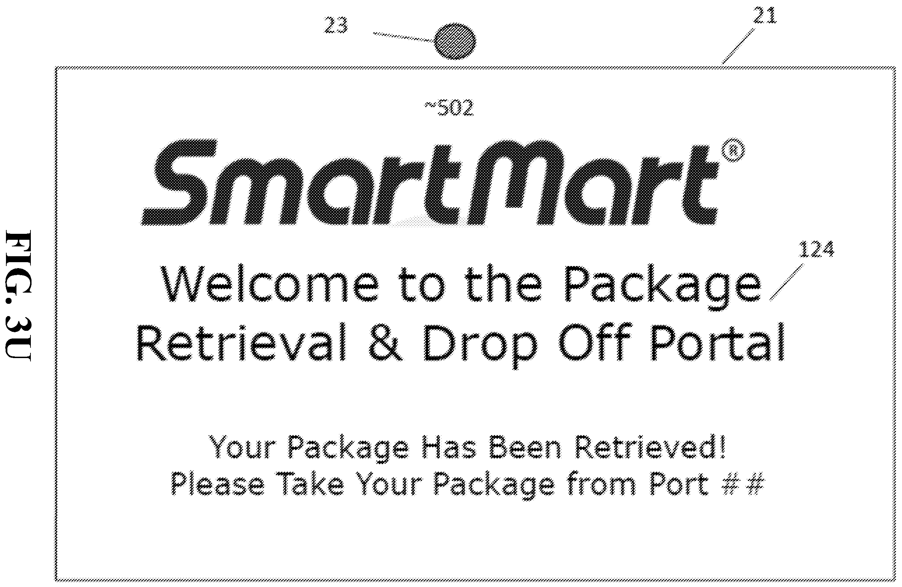

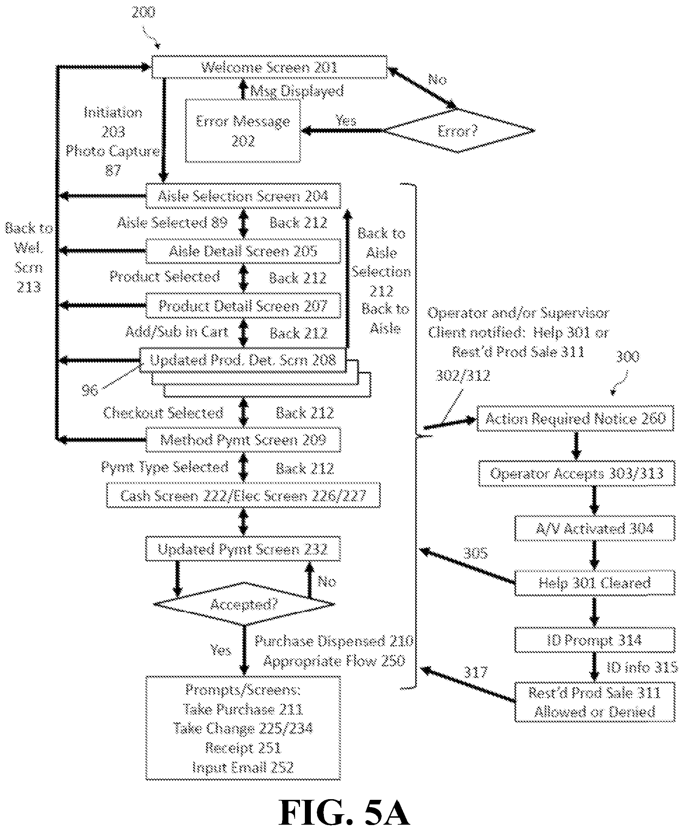

Now referring to **FIG. 5A****,** it can be appreciated that an in-person operation **200** of the automated retail facility unit **1** with remote management and manipulation provides a seamless transaction for a customer that is complete with customer service as needed. It should be understood that the following discussion is only one embodiment of the operational method and interaction of the unit **1** and system **10** with a customer. The in-person operation **200** process begins at the Welcome Screen **201** displayed on the touchscreen device **21** of the customer interface module **20** (**FIG. 3**A). Each "screen" or "page" displayed to or seen by a customer at the customer interface module **20** is a single page app generated by the client **56** based on information available to the client **56** that is stored at the database server **42.** For example, if one or more device actors **47** that have general relevance to any transaction are reporting errors (such as printer **28** inoperable **78** or cash machine module **32** inoperable **79**), the Welcome Screen **201** will provide notice **202** of these errors on the touchscreen device **21** (**FIG. 3**A) before a transaction process is initiated by the customer. At initiation **203,** which may be activated by a touch of the touchscreen **21** by a customer or the scanning of a customer loyalty card or equivalent action, the system **10** directs the user interface module **20** via one or more device actor(s) **47** to capture a digital photograph **87** of the customer by one or more of the onboard cameras **23,** which is sent via the local computer **41** to the client **56** and stored at the database server **42.** Initiation **203** causes the customer interface to display the Display Aisle Selection Screen **204** on the touchscreen device **21** (**FIG. 3**B). The Display Aisle Selection Screen **204** is generated by the client **56** based on information of available inventory **120** stored at the database server **42** and sent to the local computer **41** for display to the customer.

The customer is prompted on the Display Aisle Selection Screen **204** to select an aisle **72.** Once an aisle is selected **89,** the system **10** generates at the client **56** an appropriate single page app based on information of available inventory **120** for the aisle chosen by the customer, which is stored at the database server **42.** This single page app is sent to the local computer **41** for display on the touchscreen device **21** as the Aisle Detail Screen **205** (**FIG. 3**C). Optionally, a supplemental Aisle Detail Screen **205a** (**FIG. 3**D) may be populated with all products **122** of a particular type (such as "gum" selected from within a "snacks" aisle). Once the Aisle Detail Screen **205** is displayed, the customer may select an individual displayed product button **206** to prompt the system **10** to display on the touchscreen device **21** a Product Detail Screen **207** for that selected product (**FIG. 3**E). As each screen/page before, the information of the selection input is sent via the local computer **41** to the client **56** at the cloud server **43** level, where an appropriate single page app is generated, in this case as the Product Detail Screen **207** for the chosen product **128.** The Product Detail Screen **207** will display information **62** about the selected product **128** provided by the database server **42** and stored thereon. Such displayed information **62** on the Product Detail Screen **207** may include a photograph or other representation of the selected product **128,** the price per unit information , the product's label, the quantity available for purchase at the facility unit, the expiration information, a discount, a customer loyalty discount, a targeted marketing message for a competing product and/or based on past purchasing history of the customer, or other information. It should be appreciated that the amount of information **62** displayed on the Product Detail Screen **207** is controlled by a supervisor operator **58** of the system **10,** which may also be based on programmed trigger events stored in the database server **42,** such as selection of a particular product, manufacturers' specials, nutritional information, past purchasing behavior, and other criteria well-known in the retail field.

The Product Detail Screen **207** also provides a customer with the prompt/opportunity to add the selected product **128** to the customer's virtual cart **93.** If a product **122** is then added to the customer's virtual cart **93** by providing the appropriate input from the customer, the system **10** generates at the client **56** an appropriate single page app showing that the selected product **128** has been added to the customer's virtual cart **93.** The "updated" Product Detail Screen **208** is (see **FIG. 3**F) then sent to the local computer **41** for display via the customer interface module **20.** The inventory data **60** for the selected product **128** is updated in the database server **42** to note the pending sale of one of the selected product **128** at the automated retail facility unit **1.** This pending sale data **95** may be used to prevent another port **17** at the automated retail facility unit **1** from dispensing the selected product **128** without conserving at least the number required to satisfy the pending sale **96.** The customer may then continue to add **97** or subtract **98** the selected product **128** from the customer's virtual cart **93** by an appropriate input received from the customer on the touchscreen **21.** Each such input information will be sent to the client **56** (and database server **42**) for generating appropriate "updated" Product Detail Screens **208** based on the input and the data available at the database server **42** for the selected product **128,** which are then instantly sent back to the local computer **41** for display via the customer interface module **20** showing the revised quantity of selected product **128.**

If a customer's virtual cart **93** includes at least one product **122,** the updated Product Detail Screen **208** (which may go through many iterations) also provides a customer with the prompt/opportunity to checkout and complete the transaction. If the touchscreen **21** receives from the customer an input for checkout **99,** the input information is sent via the local computer **41** to the client **56,** which then contacts the database server **42** for generating **145** a single page app for a Method of Payment Screen **209** that is then sent to the local computer **41** for display via the customer interface module **20** (**FIG. 3G**). Based on the information stored on the database server **42** for which methods of payment **220** are available to the customer at the port **17** in use by the customer (if one of the payment method devices is not working the option will be disabled or if cash/change is low this option will be disabled), the Method of Payment Screen **209** (see **FIG. 3**G) will display the appropriate information to the customer. At this point the customer may select the desired method of payment **220,** and the selection input is then relayed via the local computer **41** to the client **56,** which then contacts the database server **42,** and a single page app for the selected form of payment **221** is generated by the client **56.**

If the input for a cash payment is received by the system **10,** the client **56** generates a Cash Payment Screen **222** (**FIG. 3**H) providing the total sales amount and instructions/prompts for the customer to insert cash into the cash machine **32.** The client **56** also activates the device actor **47** for the cash machine **32** (which is in bidirectional communication with the cloud server **43** via a direct communication with the local computer **41**) with instructions to accept cash (either or both coins and banknote currency) until at least the total sales amount is reached. The cash machine **32** provides messages to the device actor **47** at the local computer **41** for every coin and banknote currency inserted and received. Preferably, the cash machine **32** can detect valid coin and banknote currency, as well as sort and separately store the same based on denomination. The local computer **41** sends the cash received message **223** from the cash machine **32** to the client **56,** which also relays this information to the database server **42.** The client **56** generates an "updated" Cash Payment Screen **232** (**FIG. 3I**) based on the information received for each cash received message **223** stating the outstanding amount still needed to be received, if any, by the cash machine **32.** Once the total sales amount is achieved or exceeded, the cash machine **32** will receive instructions from the client **56** via its appropriate device actor **47** to halt receiving further coin and banknote currency. The final updated Cash Payment Screen **232** (**FIG. 3J**) will indicate the amount inserted and if any change is owed based on inserting more cash than the total sales amount. The client **56** will also send instruction message(s) to the appropriate connected device(s) **45** via a PLC **51** to activate the dispensing units **108** to begin dispensing the purchased product(s) **128.** If change is owed after the dispensing step (the client **56** will communicate with the database server **42** and know if more money than the total sales price was received by the cash machine **32**), the client **56** will send instructions to the device actor **47** for the cash machine **32** to issue the amount owed to the customer. The client **56** generates a Please Take Your Change Screen **225** (**FIG. 3K**) based on the information received and stored for cash received by the cash machine **32.** A process that is essentially the reverse of cash reception begins in which cash refunded messages **74** are sent by the cash machine **32** to the higher level actors and "updated" Please Take Your Change Screen(s) are displayed to the customer at the customer interface module **20** for each coin or banknote currency dispensed.

If the input for an electronic payment (including, but not limited to credit/debit card, associated store credit card, customer account tab/balance, vouchers with a readable code or identifying number, customer loyalty program credits, and contactless payment devices (such as RFID, NFC, mobile payment/digital wallet services, etc.)) is received by the system **10,** the client **56** generates an appropriate Electronic Payment Screen **226** (**FIG. 3**L) providing the total sales amount and instructions/prompts for the customer to begin the chosen electronic payment process. For any available method of electronic payment selected by the customer, the client **56** will receive the input selection from the local computer **41** and send the information to the database server **42** for storage. For a credit card payment, debit card payment, or other form of payment requiring a magnetic strip or chip-in-card reader, the client **56** activates the device actor **47** at the local computer **41** for the appropriate card reader device **33** and numeric pad **35,** as needed, at the automated payment module **30.** For a contactless payment device form of payment, the client **56** activates the device actor **47** at the local computer **41** for the appropriate contactless payment device reader **34** and numeric pad **35,** as needed, at the automated payment module **30.** For a form of electronic payment that requires an optical reader **36** for a barcode, a matrix/two-dimensional barcode, or other machine-readable optical marking (e.g., customer loyalty account/voucher with a unique bar code or QR CODE^{®}), the client **56** activates the device actor **47** at the local computer **41** for the appropriate optical reader **36** and numeric pad **35,** as needed, at the automated payment module **30.** In some embodiments, the ID scanner **29** included in the customer interface module **20** will perform the functions of the optical reader **36.** For a form of electronic payment that requires direct input of customer account/serial numbers, user names, and/or alphanumeric passwords (e.g., customer loyalty account balances, account tabs, certain vouchers, or coupons), the client **56** generates an appropriate single page app that provides a keyboard for such input on the touchscreen **21.** Alternatively, the client **56** may activate the device actor **47** at the local computer **41** for an optional keyboard hardware **25** as a component device of the customer interface module **20.** When appropriate for any of the electronic methods of payment, entry of a PIN, billing address zip code, or other validation information/numeric code may be input by the customer at the activated numeric pad **35,** or on the touchscreen **21** or the optional keyboard hardware **25.** Instructions for such required validation information from a customer will be displayed on an "updated" Electronic Payment Screen **228** (**FIG. 3**M) generated by the client **56** based on information received and processed by the system **10.** If an electronic signature is needed, preferably the touchscreen **21** can accept a signature of the customer on an updated Electronic Payment Screen **228** generated by the client **56** based on information received and processed by the system **10.** If necessary, an optional electronic signature pad hardware **38** may be installed with the automated payment module **30,** and it will be activated by a device actor **47,** as needed.

The validation process for a credit card/debit card payment will be discussed in detail, but it should be understood that the other forms of electronic payment discussed above may have the same, similar, or different validation steps, and all of which is within the scope of the disclosed invention. As mentioned above for a credit card/debit card form of electronic payment, the client **56** activates the device actor **47** at the local computer **41** for the appropriate card reader device **33** and numeric pad **35,** as needed, at the automated payment module **30.** An Electronic Payment Screen **227** generated by the client **56** provides prompts/instructions to the customer to insert a card into a card reader **33** (e.g., magnetic strip reader or chip-in-card/EMV reader). If a validation number **35a** is required (e.g., PIN, zip code of billing address, etc.), the prompts/instructions may appear on the card reader **33** at the automated payment module **30.** Preferably, the card reader **33** sends a request to the system **10** (via the local computer **41** to the client **56**) to generate a single page app with the prompts/instructions on the customer interface module **20.** The card reader **33** is in direct communication with the local computer **41** via a device actor **47** and, once the card information **33a** and any validation number **35a** is received by card reader **33,** card reader **33** sends the card information **33a** to the local computer **41** in an encrypted form. The local computer **41** in turn sends the encrypted card information **33a** to the cloud server **43** level, which will send the secured message **230** to the payment processor (payment gateway) **75** for contacting the merchant payment authority **76** for the card. The payment gateway **75** will communicate securely with the merchant payment authority **76** (such as a credit card association **76a**), which will communicate with the issuing bank or other financial institution **77** for the card. The payment gateway **75** sends back the information message **231** from the merchant payment authority **76** to the cloud server **43** level for a successful payment acceptance or any error that has occurred. At each step, as appropriate, the client **56** will generate an "updated" Electronic Payment Screen **228** (**FIG. 3**M) for display at the customer interface module **20** (such as Enter the PIN code, Incorrect PIN, PIN accepted, Enter Zip Code, Transaction Error, Transaction Approved, etc.). It should be noted that the above discussion is but one exemplary embodiment of the credit card/debit card payment, and others, such as the local computer communicating directly with the payment gateway **75,** exist within the scope of the present invention.

The client **56** will then send instruction message(s) to the appropriate PLC **51** connected device(s) **45** to activate the dispensing units **108** to begin dispensing the purchased product(s) **128.** If change is owed after the dispensing step (the client **56** will communicate with the database server **42** and know if more money than the total sales price was received, such as a debit card cash back transaction), the client **56** will send instructions to the device actor **47** for the cash machine **32** to issue the amount owed to the customer. The client **56** also generates a Please Take Your Change Screen **225** (**FIG. 3K**) based on the information received and stored for the transaction and any change provided.

If a refund is owed after the dispensing step due to an error in dispensing that cannot be corrected by the system **10** (discussed above), either cash change can be remitted for a cash form of payment **240** or a message can be securely communicated through the payment gateway **75** to the appropriate merchant payment authority **76** for the electronic form of payment **241** that a certain amount is being refunded.

In some embodiments, the system **10** can accept more than one method of payment sequentially until the total sales amount is satisfied. Once payment is accepted, the purchased product(s) **128** are dispensed **210** by the unit **1** following instructions from the system **10.** The system **10** will alert the customer that products are being dispensed **210** (see **FIG. 3**N). The manner and order of dispensing of purchased products **128** is important. The system **10** stores the selected products at each step in the database server **42** for the pending transaction, adding and/or subtracting as the customer makes selections and the input information is received by the system **10.** For example, if a customer has purchased a loaf of bread **134,** a case of **12** ounce canned beverages **137,** a bag of chips, and a pack of gum **133,** the system **10** at the client **56** will process the purchased goods list based on a scale of fragility factors (e.g., weight, size, rigidity, able to be mashed or broken, and relative ease/difficulty of being mashed or broken, etc.) stored in the system **10** at the database server **42.** The client **56** will then send activation instructions to the appropriate PLC **51** in order of the least fragile to the most fragile purchased product **128.** The activation of each PLC **51** is sequential and one at a time. By the use of proper function/error message and sensors, the system **10** will monitor product dispensing progress and/or location of each dispensed good **129.** See the disclosure above for the process of activating a PLC **51** and dispensing units **108.** Assuming no errors in dispensing occur (see above for automatic error correction process), the case of **12** ounce canned beverages will be dispensed first and moved by the conveyor belt **169** to the dispensing chute **140,** which preferably remains closed until all purchased products **128** are delivered. For large orders or purchases of more than one large or bulky good **129,** the dispensing chute **140** may be opened periodically during dispensation. Because the bread, gum, and chips are not likely to cause harm to each other as each is placed in the dispensing chute **140,** these may be then dispensed in any order and moved by the conveyor belt **169** to the dispensing chute **140.** Alternatively, a predetermined dispensing flow **250 of** products **122** in inventory **120** can be stored at the database server **42** and dispensing will then follow this predetermined dispensing flow **250** based on the list of purchased products **128** stored in the database server **42** for the transaction. In either case, the client **56** processes the information to determine or set the order of dispensing. The stored fragility factors, their relative weight, and/or the stored predetermined dispensing flow **250** can be revised or updated in administrative operations via the administrative client (data input in the administrative interface **81** and/or the handheld inventory management device **84**). Once all purchased product(s) **128** are dispensed, the client **56** will send an instruction to the local computer **41** to activate the device actor **47** for the printer **28** to prepare a receipt for the transaction. Alternatively, the client **56** may generate **251** a single page app prompting the customer to input a selection for a paper or an electronic receipt. The input information is sent by the local computer **41** to the higher level components **46.** If paper is selected, the client **56** will send an instruction to the local computer **41** to activate the device actor **47** for the printer **28** to prepare a receipt for the transaction, as above. If electronic is selected, the client **56** will generate **252** a single page app prompting the customer to input an email address (or confirm an email address associated with the customer stored in the database server **42**). The email address will be sent by the local computer **41** to the client **56,** which will generate and send an electronic receipt to the email address provided. The email address provided may also be stored in the database server **42** to be associated with the customer in a future transaction based on electronic payment information, initiation photograph and facial recognition, customer loyalty program identifying name/number, etc.). In some embodiments, information associated with a particular customer, including past shopping history, may be stored as a non-temporary file in the database server **42,** and stored information may be used for marketing purposes (especially targeted marketing based on past behavior and analytics). The customer is then prompted **211** to take the purchase in the dispensing chute **140** and the paper receipt, if appropriate, via the customer interface **20** by a final screen generated by the client **56** (**FIG. 3**O).

At any point from **203** to **209,** the process **200** can be reversed by a customer selecting a "back" operation **212** or even terminated by a "cancel" or "quit" operation **213** via input onto the customer interface **20.** By receiving a cancel operation **213** on any of the transaction screens during a pending transaction, the local computer **41** will communicate the cancel operation **213** to the client **56.** The client **56** will instruct the database server **42** to purge the pending transaction data stored thereon, and the client **56** will send the Welcome Screen **201** **FIG. 3**A to the local computer **41** for display on the customer interface **20.** This operation also effectively restarts the process **200.** By receiving a back operation **212** on any of the transaction screens during a pending transaction, the local computer **41** will communicate the back operation **212** to the client **56.** The client **56** will generate the previous transaction screen for display on the customer interface **20.** Preferably, each transaction screen is temporarily saved as a "map" of the pending transaction at the database server **42,** and the client **56** will instruct the database server **42** to send the appropriate transaction screen to be sent to the local computer **41** for display on the customer interface **20.** Alternatively, the back operation may be displayed to the customer as a choice to select a different aisle (e.g., when on the Aisle Screen **205** **FIG. 3C**) or return to an aisle (e.g., when on a Product Screen **207** **FIG. 3E**). Other navigational input selections may be similarly incorporated as appropriate for a given configuration of the system **10** within the scope of the disclosed invention.

If an error **214** occurs during the operation process **200,** the system **10** will attempt to correct the error by automated low level (PLC **51** and/or device actors **47,** as appropriate to the error) retries and then by higher level automatic remote manipulation or virtual intervention by a supervisor operator **57** via the supervisor operator interface **71,** as described above. The customer may also initiate at any time a supervisor operation process **300** by inputting a selection **301** of the "HELP" activator/operation or inputting a selection **311** for a "restricted sale" product **130** (i.e., alcohol and tobacco products). The HELP activator **83a** may be a dedicated, physical hardware device in the form of an input key located at the user interface module **20** that is active for receiving an input during any pending transaction. Preferably, the HELP activator **83a** is a displayed input selection on the touchscreen **21** as shown on, for example, the Product Detail Screen **207 (****FIG. 3E****).** The supervisor operator client **58** is notified **302** of the help request by an action required notice **260** on the supervisor operator interface **71.** An available supervisor operator then accepts **303** the request via the supervisor operator interface **71.** If necessary, the videoconference function may be activated **304** by the supervisor operator or automatically (both achieved by the client **56** sending an instruction to the device actors **47** at the local computer **41** for activating the camera **23,** audio speakers **26,** and microphone **27**). Once the help request is resolved, the supervisor operator terminates the help request in the supervisor operator interface **71,** and the customer is returned **305** to the in-person operation **200.** However, it should be noted that the customer is never removed from the shopping web app page during a help operation. Preferably, the single page web app from which the help request was generated remains and is then reconfigured to include a video area of the supervisor operator on the operation side of the transaction. Optionally, only audio of the supervisor operator is provided to assist the customer. The supervisor operator may input information regarding the help request in the supervisor operator interface **71** for storage in the database server **42,** which may be shared directly or indirectly with the administrative client **59** for a repair/maintenance action at the automated retail facility unit **1.** Also, the customer may continue the shopping experience by browsing and/or selecting other products **122** during a HELP operation.

For a restricted sale product **130** operation (see **FIGS. 3Q** & **3R**), the customer is preferably automatically and immediately notified on the screen **21** after selecting an age-restricted product **130** that a driver's license or other photograph ID must be scanned at the scanner port **39.** The local client **41** prompts **314** the customer to insert a government-issued photographic ID into the scanner port **39** of the user interface module **20,** such as on the Restricted Sale Prompt Screen **318 (****FIG. 3Q****).** Preferably, the scanner port **39** is a commercially available device with associated software for detecting a forged photographic ID. The scanned ID is sent **315** to the supervisor operator interface **71** for comparison with the video feed (activation of the cameras **23** by a device actor **47**) of the customer and the photograph taken of the customer at initiation **203,** and the customer is provided with an updated screen **319** during the ID check process **(****FIG. 3R****).** The supervisor operator **57** is notified **312** of the restricted item **130** selection by an action required notice **260** on the supervisor operator interface **71** after the customer's ID has been scanned. In a preferred embodiment, the customer may continue with the shopping experience without interruption by the system for the ID and age-restriction sale authentication process. Thus, a customer may continue to browse and place other items, including other age-restricted products **130** in the virtual shopping cart **93.** Only if the authentication is denied or if the authentication has not been completed before the payment screen is activated will there be any interruption in the normal flow of shopping and customer experience. An available supervisor operator then accepts **313** the request. If the restricted sale is denied by the supervisor operator, the selected restricted sale product is automatically removed from the customer's virtual cart **93** by client **56** and stored in the database server **42** in the file for the pending transaction, and further restricted sale selections requiring the same or a greater age limitation are automatically denied. If the restricted item selection is resolved, the supervisor operator terminates the request in the supervisor operator interface **71,** and the customer is returned **317** to the in-person operation **200.** Importantly, the supervisor authentication process described above adds a heightened level of accountability by linking every age-restricted product **130** sale to a given supervisor/administrator operator. Therefore, all restricted transactions are stored in memory of the database server **42** with a copy of the photo/video of the customer taken at the initiation of the transaction, during the authentication process, and the scanned government-issued photographic ID. Unlike a sale of an age-restricted product **130** at a convenient store, the system **10** can identify and retrieve all relevant information for each and every age-restricted product **130** sale.

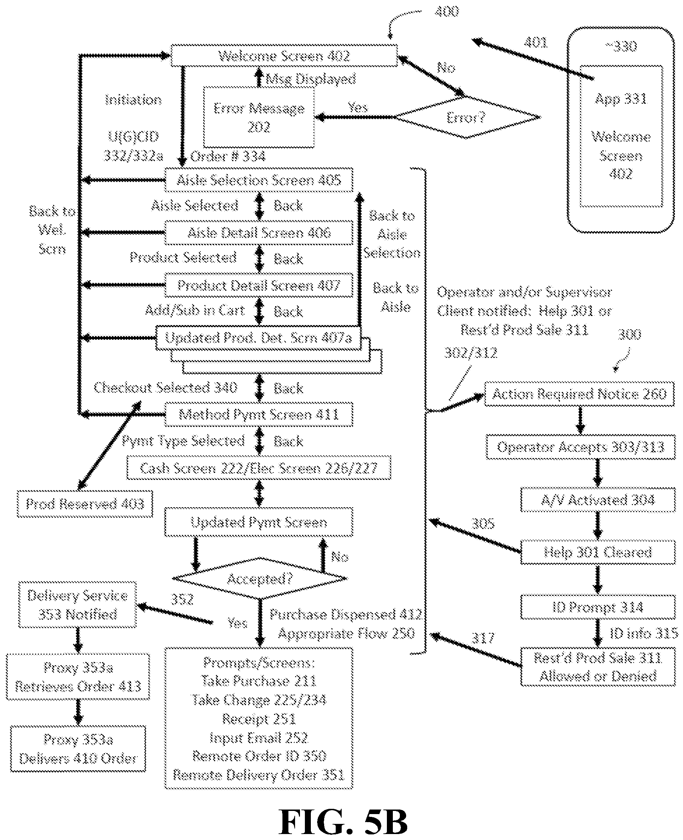

**FIG. 5B** is a flow chart depicting a remote operation **400** of an exemplary embodiment of an automated retail facility system **10** of the present invention. The remote operation **400** can be performed from any computing device **330,** including, but not limited to, a personal computer, a tablet, a smartphone or other handheld computing devices, each having a user interface, a user input means (e.g., voice, hardware keyboard, virtual touchscreen keyboard, etc.), a processer, a modem or other device for connecting to a remote network (e.g., wired data port, such as USB, coaxial, and Ethernet, and related hardware and wireless network hardware including transceiver for WiFi, cellular, BLUETOOTH, or other electromagnetic signals) for establishing a network connection, preferably a secure network connection, with the system **10.** The computing device **330** may establish the network connection either via a dedicated application, such as a smartphone app **331,** or a web-based application accessible from within a web browser. For brevity, the following disclosure will focus on an exemplary smartphone app **331** with established secure network connection with the system **10;** however, it should be understood that other forms of connection and access are contemplated to be within the full scope of the present invention.

The smartphone app **331** establishes a secure network connection **401** with the system **10** via the cloud server **43.** The remote operation order **400** begins with a remote Welcome Screen **402** similar to that shown in **FIG. 3A** displayed on the touchscreen of the smartphone **330.** It should be appreciated that error messages for a particular unit **1** will not be shown on the remote Welcome Screen **402,** unless a unit **1** has been selected, saved, or default populated as a "favorite." Each "screen" or "page" displayed to or seen by a remote customer is preferably a single page app generated by the client **56** based on information available to the client **56** that is stored at the database server **42.** Other configurations, such as a plurality of display template pages may be embedded in the smartphone app **331** for efficient rendering at the smartphone **330.** The smartphone app **331** will preferably have a stored user name for the remote customer, but an option is available for entering a user name or customer loyalty identifying number at the Welcome Screen **402** (see **FIG.** 5B) that is associated with the remote operation order **400.** In either case, the unique customer identifier (UCID) **332** is transmitted to the client **56** by the smartphone app **331** to be stored in memory at the database server **42.** A remote customer may proceed as a "guest," in which the client **56** generates a unique guest customer identifier (UGCID) **332a** for the remote operation order **400** and stored in memory at the database server **42.** The client **56** also generates a unique remote order number **334** that is linked to the pending remote order and stored in the memory of the database server **42.** Once the system **10** has a unique customer identifier **332** or unique guest customer identifier **332a** stored at database server **42** for the pending remote operation order **400,** the smartphone app **331** provides the remote customer with an option to select a specific, preferred automated retail facility unit **1** for the remote operation order **400** or provides a list of the closest automated retail facility units **1** for selection. The latter may be based on an input location, such as zip code, address, or automatically processed via accessing the smartphone location services on the smartphone **330** (e.g., GPS, cell tower connectivity, and/or BLUETOOTH). Choosing an automated retail facility unit **1** for the remote operation order **400** allows the client **56** to access the inventory **120** available for purchase stored in the database server **42,** which also allows storing the remote operation order **400** in the database server **42** as a hold on the selected products **128** to ensure that the selected products **122** are in inventory **120** when the selected products **128** are to be dispensed **403.** As the remote operation order **400** progresses, the database server **42** file for the remote operation order **400** is updated. If the selected automated retail facility unit **1** is offline or otherwise unavailable, the remote customer can be notified and prompted to select another location.

Once an automated retail facility unit **1** is selected, the smartphone app **331** displays the Display Aisle Selection Screen **405** similar to that shown in **FIG. 3B** on the touchscreen of the smartphone **330.** The Display Aisle Selection Screen **405** is generated by the client **56** based on information of available inventory **120** stored at the database server **42** and sent to the smartphone app **331.** The process of navigation of virtual aisles and individual products in inventory on the smartphone app **331** is essentially the same as for the in-person operation **200,** described in detail above. As in that process **200,** each input by the remote customer in the remote operation **400** is transmitted to the client **56** and relevant information is stored at the database server **42.** In response to these input(s) and data stored at the database server **42,** the client **56** then generates an appropriate screen/page for display to the remote customer, including an Aisle Detail Screen **406** similar to that shown in **FIG. 3C** and Product Detail Screen **407** similar to that shown in **FIG. 3E****.** The Product Detail Screen **407** will display information about the selected product **128** provided by the database server **42** and stored thereon, as well as a prompt/opportunity to add the product **122** to the remote customer's virtual cart **93,** as described above. If a product **122** is then added to the remote customer's virtual cart **93** by providing the appropriate input from the customer, the system **10** generates at the client **56** an appropriate "updated" Product Detail Screen **407a** similar to that shown in **FIG. 3F** and sent to the smartphone app **331.** The inventory data **60** for the product **122** is also updated on the database server **42** to note the pending remote sale of one of the products **122** at the selected automated retail facility unit **1.** The remote customer may then continue to add **97** or subtract **98** the product **122** from the remote customer's virtual cart **93** by an appropriate input received from the remote customer on the touchscreen of the smartphone **330.** Each such input information will be sent to the client **56** (and database server **42**) for generating appropriate updated Product Detail Screens **407**a based on the input and the data available at the database server **42** for the product **122,** which are then instantly sent back to the smartphone app **331** for display showing the updated/revised quantity of product **122.**

If a remote customer's virtual cart **93** includes at least one product **122,** the Product Detail Screen **407** also provides the remote customer with the prompt/opportunity to checkout and complete the transaction. If the touchscreen of the smartphone **330** receives from the remote customer an input for checkout **340,** the input information is sent via the smartphone app **331** to the client **56,** which then contacts the database server **42** for generating a single page app for a Method of Payment Screen **411** similar to that shown in **FIG. 3**G that is then sent to the smartphone app **331** for display. The smartphone app **331** is naturally limited to electronic forms of payment, and these proceed as detailed elsewhere in the instant disclosure, with the exception that information of electronic payment forms (e.g., card numbers and validation information, mobile payment/digital wallet service information, etc.) must be entered manually into the smartphone app **331** or accessed from memory associated with the smartphone app **331** or user and/or stored in the database server **42** rather than activation of a reader device **36.** Once electronic payment is confirmed, the client **56** generates an electronic receipt for delivery to the remote customer via email, text message, stored in memory at the smartphone **330** and accessible by the smartphone app **331,** and/or other electronic delivery methods. Alternatively, payment may be deferred until the remote customer or a proxy **353a** arrives at the selected automatic retail facility unit **1** for dispensing **412.**

The client **56** also transmits the unique remote order identifier **350** to the remote customer via an email, text message, or to the smartphone app **331** for storage in the memory of the smartphone **330** and subsequent retrieval by the remote customer on the smartphone app **331.** The unique remote order identifier **350** may be in the form of a number, a letter string, an alphanumeric string (each with or without symbols), an optically readable code (such as a barcode or two-dimensional barcode), a computer readable file that can be transmitted to and within the system **10** via remote network connection or directly via RF transmission (such as RFID, BLUETOOTH, or other known RF transmission methods) to an appropriate receiver or transceiver at the selected automatic retail facility unit **1,** picture code, or others. The transmittal of the unique remote order identifier **350** to the remote customer may be performed at any time during the remote order operation. Preferably, the transmittal occurs after completion of the of the pending remote order transaction. More preferably, the transmittal occurs after an electronic payment process is completed. The remote customer or a proxy **353a** may use the unique remote order identifier **350** to retrieve the remote order **351** from the database server **42** of the system for dispensing **412** or for payment process if payment was deferred. At arrival to the selected automatic retail facility unit **1,** the remote customer or a proxy **353a** initiates an in-person operation **200** as detailed above. On the Display Aisle Selection Screen **204** on the touchscreen device **21 (****FIG. 3B****),** the remote customer or a proxy **353a** may select a touchscreen button for retrieval of a remote order **351** in lieu of selecting a virtual aisle. In response to the input for retrieval of a remote order **351,** the client **56** generates a Remote Order Retrieval Screen **408** and transmits it to the local computer **41** for display on the touchscreen device **21 (****FIG. 3S****).** The Remote Order Retrieval Screen **408** includes a prompt or instruction to input the unique remote order identifier **350** to retrieve the remote order **351** information from the database server **42.** If the unique remote order identifier **350** can be input manually, the Remote Order Retrieval Screen **408 (****FIG. 3S****)** includes a data input area on the touchscreen device **21.** If the unique remote order identifier **350** can be input by RF transmission, the client **56** also sends instructions to the appropriate device actor **47** at the local computer **41** for activation of the RF signal transceiver device **34** at the customer interface module **20.** Alternatively, RF signal transceiver device **34** may also be always active at the automated retail facility unit **1.** Alternative methods of inputting identifying information **354** may be selected from any of the following, including, but not limited to, the unique customer identifier **332,** unique guest customer identifier **332a,** a user name, phone number, a customer loyalty card account number, a scanned barcode, a scanned two-dimensional barcode, an email address, a credit card number, scanned credit card, scanned government-issued photo identification, facial recognition, or other identifying information that can be associated with the unique remote order identifier **350** stored in the database server **42.** In response to the input, the local computer **41** sends the unique remote order identifier **350** or other identifying information to the client **56,** which compares this information with the stored data in the database server **42** to locate and recall the stored remote order **351** associated with the input unique remote order identifier **350** and/or other input identifying information **354.** The stored data in the database server **42** is then processed by the client **56** to proceed with dispensing, as described in detail above, including the process for refunding any items that could not be dispensed and the restricted item sale process for any restricted items **130.** If the payment was deferred, the client **56** first proceeds with generating the Method of Payment Screen **209 (****FIG. 3G****)** after the restricted item sale process for any restricted items **130** but prior to dispensing.

In some embodiments of the smartphone app **331,** a service **124** option is provided for a remote customer to request an option of delivery **352** of the purchased goods **128.** Preferably, payment is required at the time of completion of a remote order **400** when the delivery option **352** is selected. If not allowed at deployment setting (location) of the selected automated retail facility unit **1,** the sale of restricted items **130** may be blocked if this option is selected during the remote order operation **400.** When the delivery option **352** is selected, a particular delivery service provider **353,** if more than one is available, must be selected. Such delivery service provider **353** is preferably selected from UBER EATS, SEEMLESS WEB, GRUBHUB, and similar services, but any local delivery service with network ordering capabilities may be used within the scope of the disclosed invention. A delivery fee, which may be dependent on the selected delivery service provider **353,** is also charged to the remote order **400.** At completion **400** of the remote order **400,** the unique remote order identifier **350** is sent to the selected delivery service provider **353** who assigns the delivery to a proxy **353a.** The proxy **353a** then follows the steps outlined above for dispensing a remote order **400** at the selected automated retail facility unit **1,** and then delivers **410** the dispensed goods **129** to the remote customer.

The inventory access ports **11,** as described above, can be opened to gain access to the various inventory dispensing modules **101** and/or **102** within the facility unit body **2.** To facilitate restocking, as well as physical audits of inventory **120,** the inventory dispensing modules **101** and/or **102** are preferably configured for sliding engagement with their frame member connections **3**k.

### Mobile Inventory Management Handheld Device

A further improvement of inventory management is a mobile inventory management handheld device **84,** which is remotely connected via the network to the administrative client **59** of the system **10.** An inventory manager operates the mobile inventory management handheld device **84** while servicing an automated retail facility unit 1. The mobile inventory management handheld device **84** (see **FIG. 10A-10D)** can be any handheld computing device **84a,** including, but not limited to, a tablet, a smartphone, or other known handheld computing devices, each having a user interface, a user input means (e.g., voice, hardware keyboard, virtual touchscreen keyboard, etc.), a processer, a modem or other device for connecting to a remote network (e.g., wired data port, such as USB, coaxial, and Ethernet, and related hardware and/or wireless network hardware including transceiver for WiFi, cellular, BLUETOOTH, or other electromagnetic signals) for establishing a network connection, preferably a secure network connection, with the system **10.** Preferably, the mobile inventory management handheld device **84** is a dedicated handheld computing device **84a** for only running the mobile inventory management app **85.** The mobile inventory management app **85** provides the inventory manager with all of the features and capabilities of the administrative interface **81,** such as inventory control (see **FIG. 10A),** unit control (see **FIG. 10B),** item control (see **FIG. 10C),** and unit mechanical monitoring and control (see **FIG. 10D).** It should be understood that the functions shown in **FIGS. 10A-10D** are representative functions shown for example only, and that other functions may be made available to an inventory manager by the mobile inventory management handheld device **84** and the inventory management app **85.** The inventory management app **85** is connected remotely to the system **10** at the cloud server **43** via a wireless network connection (such as cellular system, BLUETOOTH, or WiFi). The unit **1** may include a BLUETOOTH, WiFi, or other wireless RF transceiver **34** for secure remote network access for the mobile inventory management handheld device **84** to the system **10.** The inventory manager can advantageously run a report onsite for any connected device **45** at the low level component **44** that has generated an error message **63** to the system **10,** which is/are stored in the database server **42.** The inventory management app **85** may also automatically alert the inventory manager of any low level component **44** that has generated an error message **63** to the system **10** upon arrival to or logging into the system **10** at the unit **1.** The inventory manager may check, repair, or replace any such connected device **45** in need of service. The inventory manager(may also perform maintenance/troubleshooting operations via the inventory management app **85** on any or all of the connected devices **45,** even if no error message **63** indicating a need of service has been generated and stored in the database server **42.**

While onsite, the inventory manager will log in to the inventory management app **85** and update, add, and/or delete the inventory **120** for each product **122** stored in the database server **42** as each inventory dispensing modules **101** and/or **102** is inspected and/or restocked. The UPC code on each product can be entered into the inventory database portal via the keyboard or scanned and populated automatically by using the integrated optical code scanner. The updated inventory information **60a** is transmitted by the inventory management app **85** to the administrative client **59** at the cloud server **43.** The administrative client **59** sends the updated inventory information **60a** to the database server **42** to be stored and accessed by the system **10.** Temperature and humidity readings within the automated retail facility unit **1** are also available by the inventory management app **85** (see **FIG. 10D**).

### Inventory Management Vehicle

A still further improvement of inventory management is shown in **FIGS. 9A-9C****.** During stocking of inventory, a stocker is vulnerable to theft of inventory, which potentially could result in bodily harm to the stocker. Additionally, it is desirable to maintain inventory in a climate controlled condition, particularly in warm or weather. An inventory management vehicle **126,** such as a specially configured truck, provides for convenient and secure inspection and restocking of inventory in the automated retail facility unit **1.** In some embodiments, the inventory management vehicle **126** can be a specially configured truck, such as the flatbed truck shown in **FIGS. 9A-9B****,** or a separate semi-trailer. The inventory management vehicle **126** is a self-sufficient inventory restocking and management platform that contains an inventory supply and restocking portion **126a** and a driving cab portion **126b.** Depending on the inventory being transported, the inventory supply and restocking portion **126a** may be climate controlled. The inventory manager can safely exit the driving cab portion **126b** within the inventory management vehicle **126** by directly entering the inventory supply and restocking portion **126a.** Thus, the inventory manager does not need to leave the inventory management vehicle **126** during restocking and inspection. The inventory management vehicle **126** is configured to be positioned next to one side of the automated retail facility unit **1** for accessing the access ports **11.** Once positioned, the inventory manager can extend side shields **161** to provide further security and privacy before opening the side inventory door(s) **11a,** located on one or both sides of the inventory management vehicle **126.** Once the appropriate side inventory door **11a** is opened, the access ports **11** of the facility unit body **2** may be accessed securely. The inventory management vehicle **126** further comprises a raised platform **162** that allows convenient access to both high and low positioned inventory dispensing modules **101** and/or **102.**

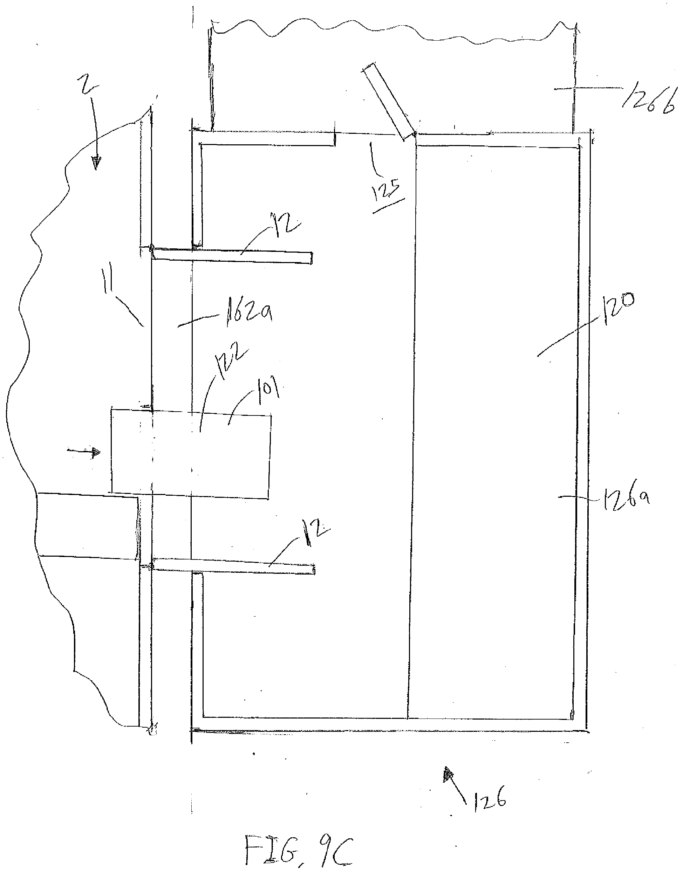

**Figure 9C** provides a top cutaway view of one embodiment of an inventory management vehicle **126** in which the restocking portion **126a** is configured to receive opened inventory doors **12** of the access ports **11** of the facility unit body **2** of an automated retail facility **1.** As indicated in **Figure 9C****,** a stocker parks the inventory management vehicle **126** about 1 foot (30 cm) from the facility unit body **2,** adjacent to a selected access port **11.** Thus situated, the inventory management vehicle **126** provides a secure platform for use by the stocker in selectively accessing the inventory access ports **11** for secure inspection and stocking of the inventory dispensing units **101, 102** with products **120,** The stocker moves from the driving cab portion **126b** to the inventory supply and stocking portion **126a,** preferably via the safety opening **125** so as to minimize exposure to potential theft. Thus situated, the stocker can safely open an inventory side door **11a** of the inventory management vehicle **126,** such as a roll-up door of the type shown in **Figure 9A** to provide access to the access ports **11** of the facility unit body **2.** As shown in **Figure 9C****,** the stocker then unlocks one or both of the access port doors **12** of the facility unit body **2.** Due to the configuration of the vehicle **126,** the doors **12** swing open into the inventory supply and restocking portion **126a,** where the doors **12** can be secured against the vehicle **126** to provide a secure barrier between the vehicle **126** and the access port **11.** Additionally, the inventory management vehicle may be provided with a platform tray **162a** that is configured to fold or slide into the opening between the vehicle 126 and the facility unit body **2** to secure the opening, support the weight of the stocker during stocking, and assist with temperature control. Optionally, an upper tray (not shown) may be provided that is configured to fold or slide into the opening between the top of the vehicle **126** and the facility unit body **2** to secure the upper opening, protect the stocker from weather elements such as rain, and assist with temperature control.

Once the access doors **12** are situated in the open position, the stocker uses the secure platform of the inventory management vehicle **126** to inspect inventory in the inventory dispensing modules **101, 102.** The stocker then selects products from the inventory **120** of the inventory supply and restocking portion of the vehicle **126a** and puts the inventory into the inventory dispensing modules **101, 102.** The raised platform **162** and other aspects and arrangements of the facility management vehicle **126** facilitate inspection and restrocking. Stocking of rolling rack dispensers **102** is accomplished simply by inserting products into the stocking end of the rolling rack dispenser **102.** As discussed above, the stocker can withdraw a selected goods dispensing tray **101** through the access port, whereby upon withdrawal a stocking end of the tray **101** is suspended below a dispensing end. This orientation facilities inspection and restocking of the goods dispensing trays **101.** When the stocking operation is complete, the stocker uses the secure platform of the inventory management vehicle **126** to reinsert the tray **101** into the facility unit body **2.** Because the system is designed for stocking in real time while the store remains in operation, the system preferably automatically takes a goods dispensing tray **101** out of service as soon as it is withdrawn, such that a purchaser cannot select or purchase goods from the tray. Once the goods dispensing tray **101** is reinserted into the facility unit body **2,** it automatically goes back online for selection and purchase of goods from the tray **101.** When inspection and stocking of the selected access port **11** is complete, the stocker uses the secure platform of the inventory management vehicle **126** for locking the inventory access port **11** to thereby secure the products **122** in the facility unit body **2.**

### Automated Package Distribution

In some embodiments, the automated retail facility unit **1** may also include an automatic package receiver/distributor service module **600** (see **FIG. 10**). An exemplary standalone automatic package receiver/distributor service apparatus is disclosed in U.S. Patent 6,690,997 to Rivalto (see also U.S. Patent Application Publications US2003/0050732 A1**,** US20040158351 A1**,** and US20060020489 A1.

The automatic package receiver/distributor service module **600** comprises at least one public receiving port **601** for receiving a package (drop-off packages **602**) from a customer for courier pick-up delivery, such as FEDEX, UPS, USPS, or other postal or courier service. As with all other modules of the automated retail facility unit **1,** the automatic package receiver/distributor service module **600** and each of its constituent components are in direct communication with local computer **41,** and therefore indirect communication with the other system higher level components **46.** In one embodiment, the drop-off packages **602** are stored in a drop-off package storage bin **604** that is only accessible by an authorized agent of the contracting courier service. Other embodiments may include receiving the drop-off packages **602** via an externally accessible individual drop-off port **605** and/or via internal storage in a uniquely numbered **604a** bin **604.** Access to these storage bins/ports are discussed in more detail below in the context of picking up and/or retrieving a package **603.** The automatic package receiver/distributor service module **600** also comprises at least one courier drop-off port **605** for receiving a delivery package (drop-off delivery packages **603**) from a courier service agent for customer pick-up. The drop-off packages **602** and/or drop-off delivery packages **603** may be limited by size and/or weight, depending on capacity and physical capabilities for the automated retail facility unit **1.** In some embodiments, the automatic package receiver/distributor service module **600** receives a drop-off delivery package **603** from a courier service via the at least one courier drop-off port **605.** A moveable platform **606** is located inside the at least one courier drop-off port **605,** and the drop-off delivery packages **603** are placed on this moveable platform **606** for receiving into the automatic package receiver/distributor service module **600.** The courier service provides to the system **10** identifying information **607** (tracking number, code, weight, size, etc.) for the drop-off delivery package **603** that the cloud server **43** sends to the database server **42** for storage and later retrieval. The automatic package receiver/distributor service module **600** scans a printed/fixed label **608** with an optically readable code **609** that is associated with the identifying information **607** for the drop-off delivery package **603** as it is received. The automatic package receiver/distributor service module **600** may optionally determine the drop-off delivery package **603** for size (light curtain scanning, for example) and/or weight (integrated scale in the moveable platform **606,** for example), which will be sent to and stored in the database server **42.** The local computer **41** sends this scanned information to the cloud server **43** which sends it to the database server **42** for storage in association with the identifying information **607.** The courier service then contacts the customer to notify that a drop-off delivery package **603** has been set for pick-up at the automated retail facility unit **1.** Alternatively, the system **10** may send an email or other appropriate electronic message to the customer notifying them of the same. In either case, the customer will be provided with a tracking number **610** and/or other identifying information **607** that will be required for pick-up of the drop-off delivery package **603.**

An additional alternative for use of the automatic package receiver/distributor service module **600** includes an employee or agent of a retail store associated with the unit 1 "stepping into the shoes" of the courier service. Therefore, it should be understood that all disclosures discussing the courier service dropping off a package **603** for drop-off delivery are applicable to this associated retail store system and method of use. In an exemplary embodiment of this use, a customer orders or requests to pick-up a product **122,** such as an online order for store pick-up; a special order for store pick-up; a filled or refilled prescription drug, device, or consumable; or a replacement rewards card or other identification as non-limiting examples. As such, the associated retail store loads the product **122** into a bin **604** of the automatic package receiver/distributor service module **600** as provided herein for a courier service. A customer is likewise contacted to notify of the availability of the product **122** for pick-up. Similarly, the automatic package receiver/distributor service module **600** can function as an automated product return drop-off station for a product **122** purchased in the associated brick and mortar store or its online commerce site. Here, the customer would access the returns service via selecting an appropriate function key via the customer user interface **20.** After inputting any required information for storage in the database server **42,** the system **10** will associate the customer user with the received returns drop-off package **602** and assign an available port **605** or internal bin **604** for storage. This process allows for security of date and time-stamped data entries and photographs of the customer user and/or the returned items.

The automatic package receiver/distributor service module **600** internalizes the drop-off delivery package **603** into an assigned, individual storage bin **604.** The cloud server **43,** based on information stored in the database server **42,** assigns an available and appropriately sized bin for the drop-off delivery package **603** and sends this information to the local computer **41** as instructions for the automatic package receiver/distributor service module **600** to internalize the drop-off delivery package **603** into the assigned, individual storage bin **604,** each with its own unique bin number **604a.** The client **56** sends instructions to the local computer **41** to activate the device actor **47** or PLC **51** for the moveable platform **606** so that it moves to the assigned, individual storage bin **604.** It should also be understood that storage bins **604** may also have a stored spatial location information that is retrieved by the system **10** and service module **600** for sending instructions to the moveable platform **606.** Once at the assigned, individual storage bin **604,** a pusher **611** moves the drop-off delivery package **603** from the moveable platform **606** into the bin **604.** A sensor **145** (e.g., weight scale and/or light curtain sensors) on the moveable platform **606** and/or in the bin **604** will then send a successful bin delivery message to the local computer **41,** which is sent to the higher level components **46** for processing and storage. The bin number **604a** is associated with the stored identifying information **607** for the received drop-off delivery package **603.** In some embodiments, the drop-off delivery package **603** is retrieved by the customer by the automatic package receiver/distributor service module **600** physically retrieving the drop-off delivery package **603** from the assigned, individual storage bin **604** and presenting it to the customer at the at least one courier drop-off port **605.** In still other embodiments, the drop-off delivery package **603** is retrieved by the customer by the automatic package receiver/distributor service module **600** physically retrieving the drop-off delivery package **603** from the assigned, individual storage bin **604** and dispensing it onto the conveyor belt system **170,** which delivers it to the dispensing chute **140** for presenting it to the customer. In a particularly advantageous embodiment, the dispensing chute **140** is at a height/level that is convenient for all customers, whether in a walk-up setting or a drive-thru setting, and is compliant with disabled persons laws and regulations, such as ADA compliancy. It is also important to note that the dispensing chute **140** has a security panel that prevents access into the unit **1** via the open dispensing chute **140.** In still further embodiments, the automatic package receiver/distributor service module **600** comprises a plurality of courier drop-off ports **605,** and each one is individually accessible by the courier service for drop-off and the customer for pickup. Each of the plurality of courier drop-off ports **605** has a bin number **604a** for storage in the database server **42** in association with the stored identifying information **607** for the received drop-off delivery package **603.** In embodiments, using internal storage in bins **604** accessible to and retrieval by the dispensing chute **140,** the dispensing chute **140** may also function as the courier drop-off port **605** where the storage process is essentially the opposite of the retrieval process described above. It should be understood that a courier service can integrate or otherwise use its handheld package delivery management device operations to interface with the automatic package receiver/distributor service module **600** to enter drop-off delivery package **603** information directly into the system **10** and for storage in the database server **42.** Also, the courier service may access the system **10** via the user interface module **20** with appropriate access security features that are pre-arranged with a given courier service.

For an in-person operation of the automatic package receiver/distributor service module **600,** the customer initiates a drop-off delivery package **603** pickup operation **612** via the customer user interface **20** by touching the Welcome Screen **201.** For example, the Display Aisle Selection Screen **204** on the touchscreen device **21 (****FIG. 3B****)** is equipped with an optional touchscreen button **613** for pick-up of a drop-off delivery package **603** in lieu of selecting a virtual aisle. In response to the input for pick-up of a drop-off delivery package **603,** the client **56** generates a Package Pick-Up Screen **501 (****FIG. 3T****)** and transmits it to the local computer **41** for display on the touchscreen device **21.** The Package Pick-Up Screen **501** includes a prompt or instruction to input the tracking number **610** and/or other identifying information **607** required for pick-up of the drop-off delivery package **603.** If the tracking number **610** can be input manually, the Package Pick-Up Screen **501** includes a data input area on the touchscreen device **21.** If the tracking number **610** can be input by RF transmission, the client **56** also sends instructions to the appropriate device actor **47** at the local computer **41** for activation of the RF signal transceiver device **34** at the customer interface module **20.** Alternative methods of inputting the tracking number **610** and/or other identifying information **607** may be selected from any of the following, including, but not limited to, a user name, phone number, a courier service account number, a scanned barcode, a scanned two-dimensional barcode, an email address, a credit card number, scanned credit card, scanned government-issued photo identification, facial recognition, or other identifying information that can be associated with the identifying information **607** provided by the courier service and stored in the database server **42.** In response to the input, the local computer **41** sends the tracking number **610** and/or other identifying information **607** to the client **56,** which compares this information with the stored identifying information **607** in the database server **42** to locate and recall the bin number **604a** associated with the input tracking number **610** and/or other input identifying information **607.** The stored data in the database server **42** is then processed by the client **56** to proceed with the presentation of the drop-off delivery package **603** by activating the appropriate device actor **47** and/or PLC **51** for retrieval processes. For embodiments with a plurality of courier drop-off ports **605** that are individually accessible, the client **56** will instruct the device actor **47** or PLC **51** for the appropriate courier drop-off port **605** having the bin number **604a** associated with the stored identifying information **607** in the database server **42** to be made accessible. The device actor **47** or PLC **51** will then electronically unlock the appropriate courier drop-off port **605.** The courier drop-off port **605** will communicate back to the device actor **47** or PLC **51** that the unlocking action was successful or if an error occurred. This message is sent up to the higher level components **46** for processing and storage. For embodiments with package retrieval at the at least one courier drop-off port **605,** the client **56** will instruct the device actor **47** or PLC **51** for the appropriate bin **604** associated with the stored identifying information **607** in the database server **42** to activate and move the drop-off delivery package **603** onto the moveable platform **606** once the device actor **47** or PLC **51** for the moveable platform **606** has successfully moved it to the appropriate bin **604.** When the drop-off delivery package **603** is successfully moved onto the moveable platform **606,** the client **56** will instruct the device actor **47** or PLC **51** for the moveable platform **606** to return to the at least one courier drop-off port **605.** The moveable platform **606** then returns to the at least one courier drop-off port **605.** Another device actor **47** or PLC **51** will then electronically unlock the at least one courier drop-off port **605.** The at least one courier drop-off port **605** will communicate back to its device actor **47** or PLC **51** that the unlocking action was successful or if an error occurred. This message is sent up to the higher level components **46** for processing and storage. For embodiments with package dispensing at the dispenser chute **140,** the client **56** will instruct the device actor(s) **47** and/or PLC(s) **51** for the appropriate bin **604** associated with the stored identifying information **607** in the database server **42** to activate and move (e.g., by a pusher **611**) the drop-off delivery package **603** onto the conveyor belt system **170.** Alternatively, especially for fragile or potentially fragile drop-off delivery package **603,** the drop-off delivery package **603** may be moved back to the moveable platform **606** and it is moved onto the conveyor belt system **170** from an appropriate height. When the drop-off delivery package **603** is successfully moved onto the conveyor belt system **170,** the client **56** will instruct the device actor **47** or PLC **51** for the conveyor belt system **170** to deliver the drop-off delivery package **603** to the dispensing chute **140.** When the drop-off delivery package **603** is successfully moved into the dispensing chute **140,** the client **56** will instruct the device actor **47** or PLC **51** for the dispensing chute **140** to be unlocked for customer access. While these embodiments are discussed in relative isolation, it should be understood that a combination of one or more of these three or other configurations can be employed in a single automatic package receiver/distributor service module **600.** It should also be understood that a proxy **353a** with the proper tracking number **610** and/or other identifying information 607 may pick-up the drop-off delivery package **603** for or instead of the customer.

Upon successful port unlocking, port retrieval, or dispensing chute delivery, the client **56** generates an updated Package Pick-Up Screen **502** and transmits it to the local computer **41** for display on the touchscreen device **21** with instructions for the customer to retrieve the drop-off delivery package from the appropriate location on the automated retail facility unit **1 (****FIG. 3U****).** A successful pick-up message is stored in the database server **42,** and the client **56** sends a message to the courier service that the package was successfully delivered.

The terms "comprising," "including," and "having," as used in the claims and specification herein, shall be considered as indicating an open group that may include other elements not specified. The terms "a," "an," and the singular forms of words shall be taken to include the plural form of the same words, such that the terms mean that one or more of something is provided. The term "one" or "single" may be used to indicate that one and only one of something is intended. Similarly, other specific integer values, such as "two," may be used when a specific number of things is intended. The terms "preferably," "preferred," "prefer," "optionally," "may," and similar terms are used to indicate that an item, condition or step being referred to is an optional (not required) feature of the invention.

The invention has been described with reference to various specific and preferred embodiments and techniques.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A system for stocking a store with products for delivery and sale of products to purchasers, comprising:
a facility unit body (2) providing a secured internal storage and dispensing area, the facility unit body (2) having insulation and a cooling system for maintaining products at controlled temperatures, and one or more dispensing locations for delivering products to said purchasers,
a plurality of inventory dispensing units (108) arranged within the facility unit body (2), the inventory dispensing units (108) comprising trays (101) configured to store and selectively dispense products, each inventory dispensing unit (108) having a stocking end and a dispensing end (154a),
a product delivery apparatus in the facility unit body (2), the product delivery apparatus operatively connected between the inventory dispensing units (108) and the one or more dispensing locations (140),
a plurality of lockable inventory access ports (11), each lockable inventory access port (11) providing selective access to one or more associated inventory dispensing units (108),
the inventory dispensing units (108) configured to selectively slide substantially out of the facility unit body (2) through an associated inventory access port (11) in a suspended relationship with the facility unit body (2) for ease of inspection and stocking of products prior to reinsertion of the inventory dispensing unit (108) back into the facility unit body (2) for dispensing of products, and
an inventory management vehicle (126) configured for positioning adjacent to a side of the facility unit body (2), the inventory management vehicle (126) configured for use in selectively accessing the inventory access ports (11) for secure inspection and stocking of the inventory dispensing units (108) with products,
wherein the inventory management vehicle (126) is a truck comprising a driving cab portion (126b) and an inventory supply and restocking portion (126a), and
wherein the inventory supply and restocking portion (126a) further comprises side inventory doors for selective access to access ports (11) containing products and a first and a second side shield (161), the first and second side shields (161) on opposing sides of the inventory side doors, the side shields (161) extendable between the inventory supply and restocking portion (126a) and the facility unit body (2) to provide security and privacy during transfer of products from the inventory supply and restocking portion (126a) to the inventory dispensing units (108) of the facility unit body (2).

2. The system of claim 1, wherein the inventory supply and restocking portion (126a) is climate controlled.

3. The system of claim 1, wherein the driving cab portion (126b) communicates with the inventory supply and restocking portion (126a) such that an inventory manager can safely enter the inventory supply and restock portion (126a) without leaving the inventory management vehicle (126).

4. The system of claim 1, wherein the inventory management vehicle (126) further comprises a raised platform (162) that allows convenient access to both high and low positioned inventory dispensing units (108) of the facility unit body (2).

5. The system of claim 1, wherein the plurality of inventory dispensing modules (101, 102) includes goods dispensing trays (101) configured to store and dispense small products.

6. The system of claim 5, wherein the goods dispensing trays (101) are configured to slide out of the facility unit body (2) such that the stocking end is suspended at an angle of suspension below the dispensing end (154a), the angle of suspension facilitating ease of inspection and stocking of products prior to reinsertion of the inventory dispensing unit (108) back into the facility unit body (2) for dispensing of products.

7. The system of claim 6, wherein the angle of suspension is between about 0 degrees to about 60 degrees.

8. The system of claim 7, wherein the angle of suspension is between about 40 to about 50 degrees.

9. The system of claim 6, wherein a plurality of the goods dispensing trays (101) include a pair of support rails (151) on opposing sides thereof, each support rail (151) having a rail wheel (151a) rotatably mounted adjacent a dispensing end thereof, the support rails (151) and rail wheels (151a) mounted in an associated front support hanger track (155) of the facility unit body (2) for use in sliding the goods dispensing tray (101) from the facility unit body (2) in the suspended relationship, and each of the front support hanger tracks (155) having a first and a second stopper (152) on opposing ends thereof, to thereby retain the support rail (151) in the front support hanger track (155) during stocking and dispensing of products.

10. The system of claim 5, wherein the plurality of inventory dispensing modules (101, 102) includes rolling rack dispensing units (102) configured to store and selectively dispense heavy or fragile products to the product delivery apparatus via gravity.

11. The system of claim 10, wherein the rolling rack dispensing units (102) are positioned below the goods dispensing trays (101), and dispensing ends of the rolling rack dispensing units (102 are adjacent to the product delivery apparatus to facilitate safe delivery of heavy or fragile products.

12. The system of claim 10, wherein each of the rolling rack dispensing units (102) comprises a conveyor platform formed by a plurality of transversely mounted freely spinning rollers substantially along a length thereof, the conveyor platform fixedly declined at a dispensing angle from a stocking end toward the dispensing end for dispensing a stock of products to the product delivery apparatus via gravity, and a roller gate mechanism adjacent the dispensing end configured for selectively releasing one of the stock of products to the product delivery apparatus upon selection by a purchaser while retaining the stock of products, the roller gate release being actuated by an electric or pneumatic mechanism.

13. The system of claim 12, wherein the dispensing angle is between about 20 to about 40 degrees.

## Patentansprüche

1. System zur Bevorratung eines Ladens mit Produkten zur Lieferung und zum Verkauf von Produkten an Käufer, umfassend:
ein Einrichtungselement (2), das einen gesicherten internen Lager- und Ausgabebereich bereitstellt, wobei das Einrichtungselement (2) eine Isolierung und ein Kühlsystem zum Halten von Produkten auf kontrollierten Temperaturen und eine oder mehrere Ausgabestellen zum Liefern von Produkten an die Käufer aufweist,
eine Vielzahl von Bestandsausgabeeinheiten (108), die innerhalb des Einrichtungselements (2) angeordnet sind, wobei die
Bestandsausgabeeinheiten (108) Ablagen (101) umfassen, die konfiguriert sind, um Produkte zu lagern und selektiv auszugeben, wobei jede Bestandsausgabeeinheit (108) ein Vorratsende und ein Ausgabeende (154a) aufweist,
eine Produktliefervorrichtung in dem Einrichtungselement (2), wobei die Produktliefervorrichtung zwischen den Bestandsausgabeeinheiten (108) und der einen oder den mehreren Ausgabestellen (140) wirkverbunden ist, eine Vielzahl von verschliessbaren Bestandszugangsöffnungen (11), wobei jede verschliessbare Bestandszugangsöffnung (11) einen selektiven Zugang zu einer oder mehreren zugehörigen Bestandsausgabeeinheiten (108) bereitstellt,
wobei die Bestandsausgabeeinheiten (108) konfiguriert sind, um selektiv im Wesentlichen aus dem Einrichtungselement (2) durch eine zugehörige Bestandszugangsöffnung (11) in einer hängenden Beziehung zu dem Einrichtungselement (2) zur Erleichterung der Inspektion und Bevorratung von Produkten vor dem Wiedereinsetzen der Bestandsausgabeeinheit (108) zurück in das Einrichtungselement (2) zur Ausgabe von Produkten zu gleiten, und
ein Bestandsverwaltungsfahrzeug (126), das zur Positionierung benachbart zu einer Seite des Einrichtungselements (2) konfiguriert ist, wobei das Bestandsverwaltungsfahrzeug (126) zur Verwendung beim selektiven Zugang zu den Bestandszugangsöffnungen (11) zur sicheren Inspektion und Bevorratung der Bestandsausgabeeinheiten (108) mit Produkten konfiguriert ist,
wobei das Bestandsverwaltungsfahrzeug (126) ein Lastwagen ist, der einen Fahrerkabinenabschnitt (126b) und einen Bestandszufuhr- und - nachfüllabschnitt (126a) umfasst, und
wobei der Bestandszufuhr- und -nachfüllabschnitt (126a) ferner seitliche Bestandstüren zum selektiven Zugang zu Zugangsöffnungen (11), die Produkte enthalten, und eine erste und eine zweite seitliche Abschirmung (161) umfasst, wobei die erste und die zweite seitliche Abschirmung (161) auf gegenüberliegenden Seiten der Bestandsseitentüren angeordnet sind,
wobei die seitlichen Abschirmungen (161) zwischen dem Bestandszufuhrund -nachfüllabschnitt (126a) und dem Einrichtungselement (2) ausfahrbar sind, um Sicherheit und Privatsphäre während der Übertragung von Produkten von dem Bestandszufuhr- und -nachfüllabschnitt (126a) zu den Bestandsausgabeeinheiten (108) des Einrichtungselements (2) bereitzustellen.

2. System nach Anspruch 1, wobei der Bestandszufuhr- und -nachfüllabschnitt (126a) klimatisiert ist.

3. System nach Anspruch 1, wobei der Fahrerkabinenabschnitt (126b) mit dem Bestandszufuhr- und -nachfüllabschnitt (126a) kommuniziert, so dass ein Bestandsmanager sicher in den Bestandszufuhr- und -nachfüllabschnitt (126a) eintreten kann, ohne das Bestandsverwaltungsfahrzeug (126) zu verlassen.

4. System nach Anspruch 1, wobei das Bestandsverwaltungsfahrzeug (126) ferner eine erhöhte Plattform (162) umfasst, die einen bequemen Zugang zu sowohl hoch als auch niedrig positionierten Bestandsausgabeeinheiten (108) des Einrichtungselements (2) ermöglicht.

5. System nach Anspruch 1, wobei die Vielzahl von Bestandsausgabemodulen (101, 102) Warenausgabeablagen (101) beinhaltet, die konfiguriert sind, um kleine Produkte zu lagern und auszugeben.

6. System nach Anspruch 5, wobei die Warenausgabeablagen (101) konfiguriert sind, um aus dem Einrichtungselement (2) zu gleiten, so dass das Vorratsende in einem Aufhängungswinkel unterhalb des Ausgabeendes (154a) aufgehängt ist, wobei der Aufhängungswinkel die Erleichterung der Inspektion und Bevorratung von Produkten vor dem Wiedereinsetzen der Bestandsausgabeeinheit (108) zurück in das Einrichtungselement (2) zur Ausgabe von Produkten vereinfacht.

7. System nach Anspruch 6, wobei der Aufhängungswinkel zwischen etwa 0 Grad bis etwa 60 Grad beträgt.

8. System nach Anspruch 7, wobei der Aufhängungswinkel zwischen etwa 40 bis etwa 50 Grad beträgt.

9. System nach Anspruch 6, wobei eine Vielzahl der Warenausgabeablagen (101) ein Paar von Stützschienen (151) auf gegenüberliegenden Seiten davon beinhaltet, wobei jede Stützschiene (151) ein Schienenrad (151a) aufweist, das benachbart zu einem Ausgabeende davon drehbar montiert ist, wobei die Stützschienen (151) und Schienenräder (151a) in einer zugehörigen vorderen Stützaufhängerbahn (155) des Einrichtungselements (2) zur Verwendung beim Gleiten der Warenausgabeablage (101) von dem Einrichtungselement (2) in der hängenden Beziehung montiert sind, und wobei jede der vorderen Stützaufhängerbahnen (155) einen ersten und einen zweiten Anschlag (152) an gegenüberliegenden Enden davon aufweist, um dadurch die Stützschiene (151) in der vorderen Stützaufhängerbahn (155) während der Bevorratung und Ausgabe von Produkten zu halten.

10. System nach Anspruch 5, wobei die Vielzahl von Bestandsausgabemodulen (101, 102) Rollgestell-Ausgabeeinheiten (102) beinhaltet, die konfiguriert sind, um schwere oder zerbrechliche Produkte zu lagern und selektiv an die Produktliefervorrichtung mittels Schwerkraft auszugeben.

11. System nach Anspruch 10, wobei die Rollgestell-Ausgabeeinheiten (102) unterhalb der Warenausgabeablagen (101) positioniert sind und Ausgabeenden der Rollgestell-Ausgabeeinheiten (102) benachbart zu der Produktliefervorrichtung sind, um die sichere Lieferung von schweren oder zerbrechlichen Produkten zu vereinfachen.

12. System nach Anspruch 10, wobei jede der Rollgestell-Ausgabeeinheiten (102) eine Förderplattform umfasst, die durch eine Vielzahl von quer montierten frei drehenden Rollen im Wesentlichen entlang einer Länge davon gebildet ist, wobei die Förderplattform in einem Ausgabewinkel von einem Vorratsende zum Ausgabeende hin fest geneigt ist, um einen Vorrat an Produkten mittels Schwerkraft an die Produktliefervorrichtung abzugeben, und einen Rolltormechanismus benachbart zu dem Ausgabeende, der zum selektiven Freigeben eines des Vorrats von Produkten an die Produktliefervorrichtung bei Auswahl durch einen Käufer konfiguriert ist, während der Vorrat von Produkten zurückgehalten wird, wobei die Rolltorfreigabe durch einen elektrischen oder pneumatischen Mechanismus betätigt wird.

13. System nach Anspruch 12, wobei der Ausgabewinkel zwischen etwa 20 bis etwa 40 Grad beträgt.

## Revendications

1. Système de stockage d'un magasin de produits pour la livraison et la vente de produits à des acheteurs, comprenant :
un élément d'installation (2) fournissant une zone de stockage et de distribution interne sécurisée, l'élément d'installation (2) ayant une isolation et un système de refroidissement pour maintenir des produits à des températures contrôlées et un ou plusieurs emplacements de distribution pour livrer des produits aux acheteurs,
une pluralité d'unités de distribution d'inventaire (108) disposées à l'intérieur de l'élément d'installation (2), les unités de distribution d'inventaire (108) comprenant des plateaux (101) configurés pour stocker et distribuer sélectivement des produits, chaque unité de distribution d'inventaire (108) ayant une extrémité de stockage et une extrémité de distribution (154a),
un dispositif de livraison de produit dans l'élément d'installation (2), le dispositif de livraison de produit étant connecté fonctionnellement entre les unités de distribution d'inventaire (108) et les un ou plusieurs emplacements de distribution (140),
une pluralité d'ouvertures d'accès d'inventaire pouvant être fermées (11), chaque ouverture d'accès d'inventaire pouvant être fermée (11) fournissant un accès sélectif à une ou plusieurs unités de distribution d'inventaire associées (108),
dans lequel les unités de distribution d'inventaire (108) sont configurées pour coulisser sélectivement sensiblement hors de l'élément d'installation (2) à travers une ouverture d'accès d'inventaire associée (11) dans une relation suspendue avec l'élément d'installation (2) pour faciliter l'inspection et le stockage de produits avant la réinsertion de l'unité de distribution d'inventaire (108) dans l'élément d'installation (2) pour la distribution de produits, et
un véhicule de gestion d'inventaire (126) configuré pour un positionnement adjacent à un côté de l'élément d'installation (2), le véhicule de gestion d'inventaire (126) étant configuré pour une utilisation dans l'accès sélectif aux ouvertures d'accès d'inventaire (11) pour une inspection et un stockage sécurisé des unités de distribution d'inventaire (108) avec des produits, dans lequel le véhicule de gestion d'inventaire (126) est un camion comprenant une section de cabine de conducteur (126b) et une section d'alimentation et de recharge d'inventaire (126a), et
dans lequel la section d'alimentation et de recharge d'inventaire (126a) comprend en outre des portes latérales d'inventaire pour un accès sélectif à des ouvertures d'accès (11) contenant des produits et un premier et un second écran latéral (161), les premier et second écrans latéraux (161) étant disposés sur des côtés opposés des portes latérales d'inventaire, les écrans latéraux (161) étant extensibles entre la section d'alimentation et de recharge d'inventaire (126a) et l'élément d'installation (2) pour fournir une sécurité et une confidentialité pendant le transfert de produits de la section d'alimentation et de recharge d'inventaire (126a) aux unités de distribution d'inventaire (108) de l'élément d'installation (2).

2. Système selon la revendication 1, dans lequel la section d'alimentation et de recharge d'inventaire (126a) est climatisée.

3. Système selon la revendication 1, dans lequel la section de cabine de conducteur (126b) communique avec la section d'alimentation et de recharge d'inventaire (126a) de sorte qu'un gestionnaire d'inventaire peut entrer en toute sécurité dans la section d'alimentation et de recharge d'inventaire (126a) sans quitter le véhicule de gestion d'inventaire (126).

4. Système selon la revendication 1, dans lequel le véhicule de gestion d'inventaire (126) comprend en outre une plate-forme surélevée (162) qui permet un accès confortable à la fois aux unités de distribution d'inventaire positionnées haut et bas (108) de l'élément d'installation (2).

5. Système selon la revendication 1, dans lequel la pluralité de modules de distribution d'inventaire (101, 102) comprend des plateaux de distribution de marchandises (101) configurés pour stocker et distribuer de petits produits.

6. Système selon la revendication 5, dans lequel les plateaux de distribution de marchandises (101) sont configurés pour coulisser hors de l'élément d'installation (2) de sorte que l'extrémité de stockage est suspendue à un angle de suspension en dessous de l'extrémité de distribution (154a), l'angle de suspension facilitant la facilitation de l'inspection et du stockage de produits avant la réinsertion de l'unité de distribution d'inventaire (108) dans l'élément d'installation (2) pour la distribution de produits.

7. Système selon la revendication 6, dans lequel l'angle de suspension est compris entre environ 0 degré et environ 60 degrés.

8. Système selon la revendication 7, dans lequel l'angle de suspension est compris entre environ 40 et environ 50 degrés.

9. Système selon la revendication 6, dans lequel une pluralité des plateaux de distribution de marchandises (101) comprend une paire de rails de support (151) sur des côtés opposés de ceux-ci, chaque rail de support (151) ayant une roue de rail (151a) montée de manière rotative adjacente à une extrémité de distribution de celui-ci, les rails de support (151) et les roues de rail (151a) étant montés dans un rail de suspension de support avant associé (155) de l'élément d'installation (2) pour une utilisation dans le coulissement du plateau de distribution de marchandises (101) à partir de l'élément d'installation (2) dans la relation suspendue, et dans lequel chacun des rails de suspension de support avant (155) a une première et une seconde butée (152) à des extrémités opposées de celui-ci pour maintenir ainsi le rail de support (151) dans le rail de suspension de support avant (155) pendant le stockage et la distribution de produits.

10. Système selon la revendication 5, dans lequel la pluralité de modules de distribution d'inventaire (101, 102) comprend des unités de distribution de châssis à rouleaux (102) configurées pour stocker et distribuer sélectivement des produits lourds ou fragiles au dispositif de livraison de produit par gravité.

11. Système selon la revendication 10, dans lequel les unités de distribution de châssis à rouleaux (102) sont positionnées en dessous des plateaux de distribution de marchandises (101) et des extrémités de distribution des unités de distribution de châssis à rouleaux (102) sont adjacentes au dispositif de livraison de produit pour faciliter la livraison sécurisée de produits lourds ou fragiles.

12. Système selon la revendication 10, dans lequel chacune des unités de distribution de châssis à rouleaux (102) comprend une plate-forme de convoyeur formée par une pluralité de rouleaux librement rotatifs montés transversalement sensiblement le long d'une longueur de celle-ci, la plate-forme de convoyeur étant inclinée de manière fixe à un angle de distribution à partir d'une extrémité de stockage vers l'extrémité de distribution pour distribuer un stock de produits au dispositif de livraison de produit par gravité, et un mécanisme de porte à rouleaux adjacent à l'extrémité de distribution configuré pour libérer sélectivement l'un du stock de produits au dispositif de livraison de produit lors d'une sélection par un acheteur tout en retenant le stock de produits, la libération de porte à rouleaux étant actionnée par un mécanisme électrique ou pneumatique.

13. Système selon la revendication 12, dans lequel l'angle de distribution est compris entre environ 20 et environ 40 degrés.
